(19) **Europäisches Patentamt** / **European Patent Office** / **Office européen des brevets**

(11) **EP 4 486 514 B1**

(12) **EUROPEAN PATENT SPECIFICATION**

(45) Date of publication and mention of the grant of the patent:
**25.06.2025 Bulletin 2025/26**

(21) Application number: **23725081.6**

(22) Date of filing: **12.05.2023**

(51) International Patent Classification (IPC):
**B05B 12/08** (2006.01)     **G05B 13/02** (2006.01)
**G01B 11/06** (2006.01)     **G06N 20/00** (2019.01)

(52) Cooperative Patent Classification (CPC):
**B05B 12/082; B05B 12/084; G01B 11/0616; G05B 13/027; G06N 20/00**

(86) International application number:
**PCT/CZ2023/050026**

(87) International publication number:
**WO 2024/235369 (21.11.2024 Gazette 2024/47)**

(54) **METHOD FOR PROVIDING PARAMETERS FOR SETTING A SPRAY-COATING APPARATUS**

VERFAHREN ZUR BEREITSTELLUNG VON PARAMETERN ZUR EINSTELLUNG EINER SPRÜHBESCHICHTUNGSANLAGE

PROCÉDÉ POUR FOURNIR DES PARAMÈTRES DE RÉGLAGE D'UN APPAREIL DE REVÊTEMENT PAR PULVÉRISATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**08.01.2025 Bulletin 2025/02**

(73) Proprietor: **SprayVision s.r.o.**
**708 00 Ostrava (CZ)**

(72) Inventors:
• **ROUL, Vojtech**
  **584 01 Ledec nad Sazavou (CZ)**
• **HENDRYCH, Jakub**
  **739 61 Trinec (CZ)**

• **GULCIK, Andrej**
  **708 00 Ostrava (CZ)**
• **KUNCICKY, Radim**
  **736 01 Havirov (CZ)**
• **KUBICEK, Jakub**
  **726 21 Ratibor (CZ)**
• **JAHN, Petr**
  **747 44 Brezova (CZ)**

(74) Representative: **Tomickova, Dana**
**PatentEnter s.r.o.**
**Koliste 1965/13a**
**602 00 Brno (CZ)**

(56) References cited:
**EP-A2- 1 074 306     US-A1- 2005 096 796**

**Description**

Technical field

The present invention relates to choosing parameters for operation of spray-coating devices. More specifically, it relates to a method which provides users with appropriate spray-coating parameters based on input criteria.

Background of the Invention

In the current state of art, setting up of spray-coating parameters is done based on experimental set ups and its results. This process is thus significantly linked with experience of the person doing the setting. Generally, it is important to find multiple optimal spray-coating parameters such as paint flow, atomization air, shaping air, rotation speed, distance from surface etc. The optimization is generally carried out using trial and error by skilled spray-coating apparatus operators during actual spray-coating operations. The process is thus very time-consuming, and a large number of testing parts may be needed.

Document WO 2019/201360 A1 discloses a method and device for digitization of spray-coating patterns applied to sample surfaces. It is thus possible to obtain a digital representation - image, of thickness of paint applied by a spray-coating apparatus set up with specific parameters onto a sample surface (e.g., a foil). No further use of these data for analyzing or providing spray-coating parameters is described in this document.

Many general approaches to analyzing large amounts of data are known in the state of the art. For example, machine learning algorithms such as neural networks can be used to learn from large training datasets and then generalize from these data and process new datapoints accordingly. Exemplary papers describing neural network architectures are:

- 2D Convolution Layer: LeCun, Y., Bengio, Y., & Hinton, G. (2015). Deep learning. Nature, 521(7553), 436-444.
- FCN Layer: Long, J., Shelhamer, E., & Darrell, T. (2015). Fully convolutional networks for semantic segmentation. In Proceedings of the IEEE conference on computer vision and pattern recognition (pp. 3431-3440).
- Max Pooling Layer: Zeiler, M. D., & Fergus, R. (2014). Visualizing and understanding convolutional networks. In European conference on computer vision (pp. 818-833). Springer.
- 2D Transpose Convolution Layer: Dumoulin, V., & Visin, F. (2016). A guide to convolution arithmetic for deep learning. arXiv preprint arXiv:1603.07285.
- Smoothing: Pal, N. R., & Pal, S. K. (1993). A review on image segmentation techniques. Pattern recognition, 26(9), 1277-1294.
- Normalization: Ioffe, S., & Szegedy, C. (2015). Batch normalization: Accelerating deep network training by reducing internal covariate shift. In Proceedings of the 32nd international conference on machine learning (ICML-15) (pp. 448-456).

Specific application of such algorithms suitable for analyzing spray-coating data or providing spray-coating parameters is however not disclosed in the state of the art.

Document EP 1074306 A2 describes a method for determining spray parameters for electrostatic spray coating. A neural network trained on measured values is used to provide paint thickness distribution and other associated spray coating parameters. This document, however, leaves a room for improvement regarding, e.g., bias-resistance or speed of the method.

It would therefore be advantageous to provide a method which could be used to find suitable spray-coating parameters, and which would thus limit the requirements on users trying to set-up their spray-coating apparatuses or would enable the users to obtain better parameters, obtain those parameters quicker etc.

Summary of the Invention

The shortcomings of the solutions known in the prior art are to some extent eliminated by a method for providing parameters for setting a spray-coating apparatus. In the method, a control unit, a machine learning algorithm implemented by the control unit, and a collection of sample spraying patterns and corresponding sample spraying profiles are used. The algorithm is trained on a training dataset where each datapoint contains at least a sample spraying profile, a corresponding sample spraying pattern, an operational spraying profile and a corresponding operational spraying pattern, wherein the operational spraying pattern corresponds to a label for the training (and thus also to an output of the network during its use).

Each spraying profile contains values of multiple profile parameters, i.e., parameters defining how a spray-coating apparatus is set and how it operates. Examples of profile parameters are paint flow, velocity of spraying applicator (e.g., a nozzle or its carrier), distance between applicator and surface, viscosity of used material etc. A type of the apparatus or a type of paint can also be among the parameters. In a specific spraying profile, values of at least some parameters are given. Some parameters can however be undefined, e.g., if a general spraying profile contains parameters defining many different types of spray-coating apparatuses, then only parameters for one specific kind of apparatus could be specified in any given profile. The algorithm can then preferably handle profiles (in training and also in operation) regardless of which or how many parameters are specified. Preferable machine learning algorithm, which is suitable for the method, is a neural network, e.g., a convolutional neural network.

Each sample spraying pattern represents a distribution of paint thickness provided by a spray-coating apparatus on a sample surface for a specific sample spraying profile. The distribution can be a 2-dimensional distribution (e.g., a number of rows and columns of elements defining local thickness), but this 2D distribution can be simplified into a 1D representation. The pattern can thus be represented as an image, where the value of each pixel describes paint thickness in the corresponding area of the surface. Preferably, each pattern is represented by a so-called representative stripe. The stripe is a vector where each value represents an average paint thickness over a corresponding slice through the sprayed paint on the surface. E.g., the stripe can be obtained by calculating an average over each row or column of an image representing the paint thickness on the surface, or it can be obtained by averaging pixel values in each row or column of an image (or its cropped part) of the surface, wherein the average values (average light intensity) are then converted into thickness values by a so-called calibration function. The rows/columns to be averaged extend along the pattern/spraying direction, i.e., parallelly with the movement of the spraying applicator. If the image is rotated with respect to spraying direction, i.e., if neither rows nor columns lead along the movement direction, the image might need to be rotated accordingly before the averaging. This can however be prevented by moving the applicator in an appropriate direction relative to an imaging device. The function can be any function describing the relationship between intensity pixel (output from e.g., a camera) and thickness values in the corresponding area (e.g., microns of paint imaged by the corresponding pixel). An exemplary way of obtaining the function is described further below.

Each operational spraying pattern represents a distribution of paint thickness provided by a spray-coating apparatus on a sample surface for a specific operational spraying profile. All the features of the operational spraying patterns can be analogical to the features of the sample spraying profiles described above., e.g., they can be in the form of representative stripes. The difference in those patterns is mainly caused by the differences in their respective profiles, the apparatuses they are provided by and any further conditions they are provided under. Sample spraying profiles are generally obtained under more controlled conditions, and they are preferably chosen such that they systematically cover or represent certain ranges of usable parameters with other parameters or conditions being kept substantially the same. Operational spraying profiles, on the other hand, can be obtained from many different sources having different conditions, without being necessarily chosen in any systematical way. The conditions mentioned above can for example be temperature, humidity, state of the apparatus, its state of wear or maintenance etc.

It other words, the sample profiles are provided in order to bring info into the method about how a spraying pattern changes when a certain spraying profile parameter (or even several parameters) changes. The operational profiles are provided in order to make the method resistant to biases provided by specific apparatus, spraying facility, manufacturer of apparatuses or their components, types of paint, maintenance technicians etc.

The sample spraying profiles in the collection belong to a multidimensional parameter sub-space defining an expected range of spray-coating applications. Preferably, the collection is a user-made collection, i.e., it contains spraying profiles and patterns collected by the user (or with that user in mind) of the method or at least the user of the parameters outputted by the method (or possibly collected by a different user working within similar parameter ranges). For example, the user can define the subspace, i.e., decide what parameters they need to be able to specify for the apparatus and in what ranges these parameters can be in their spray-coating facility. Then the user defines the sample profiles, e.g., randomly or approximately uniformly divides each dimension of the subspace by several specific values of the corresponding parameter and combines these values into spraying profiles. For each of those profiles, the user than uses one or more of their apparatuses to provide the corresponding patterns. Calibration and or simplification (transformation of patterns into stripes) can then take place, and the collection is created.

The sample spraying profiles in the training dataset belong to a multidimensional parameter sub-space defining a training range of spray-coating applications, wherein the training range sub-space is in at least some dimensions more finely covered by the sample spraying profiles and/or is broader than the expected range sub-space. Preferably, it is both. Preferably, it is finer and/or broader in all dimensions of the parameter sub-space. It can also have more dimensions. Since the training of the machine learning algorithm is preferably independent of the users of the method, the training dataset advantageously contains more datapoints that the user-specific collections. For the training of the method, more care can be usually taken with data collection and more time and resources can be spent. The training range should also be large enough to cover most or all of possible spraying applications. In particular, the expected range can be a proper subset or subspace of the training range, i.e., the collection sub-space can be a proper sub-space of the training parameter sub-space. Such a relationship between the ranges reflects the fact that the training dataset needs to be general enough for many different applications for many different spray-coating plants, while the collection should help direct the method and its algorithm to the specific sub-space relevant for a specific spray-coating plant or for a few specific applications etc.

The training dataset sample data can be collected by the provider of the method (i.e., the party training the machine learning algorithm). This provider can decide which spraying parameters need to be represented in some profiles of some expected customer applications. Then they can decide on the range for each of those parameters and on how finely the range needs to be covered, e.g., decide whether some parameter needs to have three values covering its range or ten values, etc. E.g., if paint flow is the specific parameter, it can be decided that it can realistically have values from 100-1500 mL/min. Fifteen values, 100 units apart, can then be used to cover the interval. A skilled person can however decide that eight values, 200 units apart, is enough, or that the values near the ends of this interval are less likely to be used than values form between, e.g., 300-750 mL/min, so this sub-range can be covered more finely than the rest. After each dimension has its defined and divided interval, individual values can be combined into spraying profiles. For example, each possible combination of the values can be used, or a subset, e.g., randomly selected, of the set of all possible profiles from the values.

For each of the profiles, a spraying pattern can then be provided by some spraying apparatus. One or more different apparatuses can be used for this. The operational profiles provide bias-resistance, so it is even possible to use a single apparatus to provide the sample data for the training set. The conditions for providing the sample patterns can be closely monitored to make sure the data are pure, that the conditions between individual sprayings differ only in the parameter values etc. Calibration foils can be used as sample spraying surfaces. Calibration and/or simplification can then take place.

The operational spraying patterns are provided by multiple different spray-coating apparatuses from different spray-coating facilities. The operational data can be provided by many different spray-coating businesses in order to provide a high-variety of data. These data do not need to be collected systematically, i.e., the technicians from the various facilities can provide patterns and profiles for the specific applications they use, without the profiles covering any ranges or subspaces. These data preferably correspond to real applications, actually used in the industry for spraying real parts. The operational data can however also (alternatively or additionally) be obtained from different user-specific collections from many different users.

The method comprises at least one iteration, each iteration comprising the following steps:

- Receiving an iteration spraying profile, i.e., a spraying profile specific for given iteration and likely different in some parameter values from profiles from other iterations, if there are any. For a first iteration, this profile can be provided by the user, e.g., when they want to optimize a spraying profile they currently use, or it can be provided by the method itself before the iterations start. In that case, it can be predefined or preferably randomly generated. For subsequent iterations, the output from the previous iteration can be used as that iteration's iteration spraying profile, e.g., after some adjustment is made to some values of the previous profile, as will be described below.

- Selecting N sample spraying profiles with N corresponding sample spraying patterns from the collection, wherein N is a predefined positive integer. N is preferably from 2 to 10, e.g., 5. The selection can be random, or it can be done according to some criteria, especially according to a predefined metric, wherein sample profiles which are close (preferably but not necessarily the closest) to the iteration spraying profile according to the metric are selected. A Manhattan distance or cosine similarity are examples of suitable metrics. These selected sample profiles are used in further steps to provide the method with information about how patterns change when parameters are shifted and what patterns look like under the user-specific conditions reflected in the collection.

- Inputting the iteration spraying profile and one of the sample spraying profiles with the corresponding sample spraying pattern into the algorithm and receiving an algorithm output describing an expected spraying pattern for each of the N selected sample spraying profiles. This step is thus repeated N times. As explained above, the algorithm receives 3 inputs - spraying profile for which a pattern is to be provided, a sample profile from the collection and its respective sample spraying pattern. The algorithm then provides its estimate of what the spraying pattern resulting from the inputted profile should look like.

- Combining the N algorithm outputs into an iteration output spraying pattern. If N is 1, this step can output its input, i.e., it can basically do nothing and can be skipped. For larger Ns, one iteration output pattern created from the N algorithm outputs is provided. The combining can for example be in the form of averaging. Simplification can also be a part of this step, or it can precede or follow it.

- Evaluating the iteration output spraying pattern according to a predetermined criterion. In this step, the iteration output pattern is tested to see if its quality is sufficient for the desired application, e.g., if the paint is used efficiently, if the sprayed surface would be covered sufficiently and homogenously, etc. Many different criteria, some examples of which are given below, can be established for this step by a skilled person, depending on the desired application, requirements of customers, etc. Commonly used criteria can be predefined in the method, e.g., in the control unit, wherein the user of the method merely selects one or more of those as needed and provides target values for the criteria.

- Adjusting the iteration spraying profile and providing it as an iteration spraying profile for next iteration if the iteration output spraying pattern does not comply with the criterion. In other words, if the iteration spraying profile does not lead to a suitable pattern, it is modified (some of its parameter values is changed) and next iteration can be started to see if the modified profile is suitable or at least better. After a certain number of unsuccessful iterations, the method might end in this step, even if the evaluation was still not successful. If the criteria used for evaluation can be used to compare different patterns (and thus their iteration profiles), e.g., if a score based on some criteria is calculated, the best performing profile found so far in the method can be saved in the method's memory and updated in each iteration in which the output pattern is found to be better. If the method ends without success, the best (though not good enough) pattern and the iteration spraying profile it is based on can be outputted.

  or

- Using profile parameters from the iteration spraying profile as parameters for setting the spray-coating apparatus if the iteration output spraying pattern does comply with the criterion. In this step, the method ends successfully - a suitable pattern was obtained, and its iteration profile can be used for setting a spray-coating apparatus. Using the profile as parameters for setting the spray-coating apparatus can have the form of actually setting an apparatus with the parameters, which can be done automatically, e.g., by the control unit of the method or by a control unit of the apparatus which receives the profile from the method, or it can be done by technicians receiving the parameters from the method. It can also have the form of e.g., sending the profile to customers or technicians, with the setting of an apparatus being done by them, remotely from where the method is actually performed. For example, this method can run as a service, wherein the customers provide input data and receive a spraying profile, while the method is run remotely from them and their apparatus by a different person. In other words, the setting of an actual apparatus might be a part of the method, following after the successful evaluation and the subsequent ending of iterating. But it does not have to be so, and the method might end by providing the parameters or the profile, with the actual apparatus setting taking place outside of the method.

It might be advantageous if all spraying patterns used during the method or during its preparation (e.g., algorithm training) are represented by the stripes, as described above. Amounts of computations and of memory space needed for the method can be significantly reduced this way, without losing a significant amount of useful information.

The parameter sub-spaces described above, i.e., the collection sub-space defining the expected parameter range and the training sub-space defining the training range, can be substantially uniformly covered by their respective spraying profiles. This means that the coverage in any given dimension (parameter interval) can be approximately uniform, e.g., it does not have to be covered by exactly equidistant values, but the values chosen need to represent the range. The endpoints of the interval can be used for the representation, preferably together with at least one middle point if the interval is longer. The exact number of values needed for the substantially uniform coverage in given dimension can be established by a skilled person. Some dimensions can also be discrete, e.g., defined not by continuous intervals but by a set of possible values. For example, parameters defining a type of apparatus, e.g., only with values gun-type and rotary bell-type, would define such a discrete dimension.

The method of the invention makes it possible to simulate spraying patterns resulting from given spraying profile, thanks to the machine learning algorithm. This simulation is used in the method to check whether a certain profile (iteration spraying profile) can be used for setting a certain apparatus, and whether suitable spraying can then be expected from the apparatus if actually set with the parameters from the profile. The need for testing the profiles and parameters by actually using them for real spraying is thus significantly reduced or removed altogether. Paint, energy, time, and other resources are thus saved by the method. The method can also be used to provide better parameters, i.e., to optimize spraying profile. This optimization process in the state of the art needs to be done by a skilled technician and it's mostly based on their intuition or experience. The process is thus time-consuming and depends on expertise of specific people. The present method, on the other hand, can be used even by less experienced technicians and can be performed much faster with less resources, more precision and more predictable and stable results.

The control unit is preferably provided with a memory, where the machine learning algorithm, the programmed instructions implementing the method, and/or the collection can be stored. It can be a local memory, but it can also be a remote storage, e.g., a cloud. For example, the control unit can be a desktop computer or its processor, provided with a hard drive. It is then preferably further provided with a display, keyboard or other input device, etc. The method can also be implemented or used as a distributed computing process, e.g., some steps can be run by different computing unit(s) than other steps, with step outputs being sent between the units.

Prior to the first iteration, another step can be present in the method - a step of receiving at least one target value for at least one spraying pattern parameter. In each iteration, the step of combining comprises determining iteration spray-coating pattern parameters from the iteration output spraying pattern (or the determining can be done after combining in a separate step), and the method further comprises a step of determining a score based on a distance between the target values of the spray-coating pattern parameters and the values or iteration spray-coating pattern parameters according to a predefined metric. This metric can e.g., be a weighted sum of absolute values of differences between target and determined parameter values. Based on the score, the iteration spraying profile is either randomly adjusted and provided as an iteration spraying profile for next iteration or its parameters are used to set the spray-coating apparatus. The evaluation is thus based on the score and for example its comparison with a score-threshold value, which might be predetermined in the method or provided by the user, as well as the formula for the score calculation. In other words, the evaluation can be based on pattern parameters, common examples of which are given below. These parameters can be automatically computed from the iteration output pattern, similarly to how they can be obtained for a real spraying pattern. Exemplary computation methods for them are also given further below.

The iterations of the method can be done as iterations of an evolutionary optimization algorithm, e.g., a simulated annealing algorithm. These algorithms, with their injection of randomness into adjustments/modifications/mutations, are suitable for the method.

The method can further comprise a step of receiving a constraint for at least one spraying profile parameter, wherein when the iteration spraying profile is adjusted, a new value of the at least one spraying profile parameter complies with the constraint. In other words, a constraint can be set for the adjustments of iteration profiles. This prevents the method from having iterations with iteration profiles unusable for given spraying application or apparatus, e.g., having a too large paintflow which would increase paint consumption more than the user can afford. Some constraints can be predefined in the method (e.g., a negative paint flow would not make sense, so a larger-than-zero constraint can be predefined), and they can be supplemented or overwritten by user whenever needed.

In the step of selecting, N spraying profiles closest to the iteration spraying profile based on a predetermined metric are selected. These sample spraying profiles are the most similar to the iteration profile, so they are the most suitable to provide useful information into the machine learning algorithm. It is however possible to select e.g., at random, disregard several the closest profile as too similar and use farther ones etc.

In the step of evaluation, at least one spray-coating pattern parameter selected from transfer efficiency, homogeneity of spray-coating, spray-coating thickness, and spray-coating width can be determined from the iteration output spraying pattern and the determined value can then be compared to at least one target spray-coating pattern parameter value. These four parameters by itself are known in the art so they are suitable also for the method so that users know what to define and what target values to input according to their needs. It is however also possible to use different or further parameters.

The combining can be done as a weighted average. Advantageous way of obtaining the weights can then be such that the weight corresponding to each algorithm output is proportionate to the distance of the corresponding selected spraying profile, from which the algorithm output is produced, to the iteration spraying profile according to a predetermined metric. This metric can be the same as the one used for selecting, if selecting is done using a metric. It is however also possible to use a different metric. Manhattan distance or cosine similarity can for example be used. This weighted average is advantageous because it gives the closest collection individual more weight in the combining.

The adjusting of the iteration spraying profile can comprise obtaining a random number and adjusting or replacing a value of a parameter (e.g., also randomly selected) from the iteration spraying profile by the obtained random number. The random number can be e.g., a multiplier. It can also be a new value of the parameter, preferably selected from given interval of possible parameter values, e.g., thresholds provided by the user as input for the method.

The multidimensional parameter sub-space defining an expected range of spray-coating application can be substantially uniformly covered by the sample spraying profiles in the collection such that in most dimensions of the parameter sub-space, multiple different values of the profile parameter corresponding to that dimension are represented in different sample spraying profiles. As described above, the endpoints of given interval can be included, preferably as well as one or more values in between them. This is preferably true for all dimensions represented by the collection, if a range is defined for parameter of that dimension. This feature can alternatively or additionally apply similarly to the training range and the training dataset.

The method can comprise a collection-preparation phase comprising the following steps:

- Preparing a set of sample spraying profiles. A skilled person can determine how many of such profiles are needed and what they should look like. Uniformly covering each dimension with multiple equidistant values and then combining these values into profiles such that each of the values is present in at least one profile can be one example of this preparing. It is however possible to e.g., make the covering of some dimension finer in some subrange which is of higher importance, or in which changes of parameter values have higher impact on the resulting pattern etc.

- For each of the prepared profiles, obtaining a corresponding sample spraying pattern by imaging a sample surface spray-coated by a spray-coating apparatus set with parameters from given sample spraying profile and calibrating pixels of the image with a calibration function. Since this step can be relatively time-consuming, because the actual spraying can take relatively high amount of time, the number of profiles needs to be chosen accordingly. The sample surface can be especially a calibration foil, i.e., a transparent foil, preferably containing a grid thereon. Other surfaces, such as a sheet of metal, glass or plastic, non-transparent foil etc., can also be used. Imaging can be done by any imaging device, e.g., a camera, preferably provided with a light source.

The calibration function serves to convert image pixels, e.g., array elements representing light brightness or similar phenomenon produced by the imaging device, into thickness values, e.g., corresponding array elements representing paint thickness. The function is obtained by calibration phase comprising the following steps:

- Obtaining at least one sample surface spray-coated by a spray-coating apparatus. The same spray-coating apparatus which is to be set by the parameters from the method can be used for this step, a different apparatus can however also be used, since the relationship between appearance (the image from imaging device) and paint thickness is mainly paint-dependent, not necessarily very apparatus-dependent. The whole collection can then be produced for a single paint or type of paint, but it can also cover multiple paint types. It is also possible to convert a specific pattern from one paint to another paint, e.g., to obtain a corresponding pattern describing brightness or thickness, which would be achieved during spraying with different paint than what was used for the actual spraying. In this way, a collection made with a certain paint or paint type can be used in the method even when a different paint or paint type is to be used, especially if calibration functions for both paint types are available.

- Imaging the sample surface. The brightness distribution can thus by obtained.

- Measuring thickness of the paint on the sample surface in multiple points on the sample surface. The points for measuring can be selected automatically, e.g., by the control unit or a different processing device. If a sample surface with a grid is used, grid cells with homogenous brightness are preferably selected, because then the measuring can take place anywhere in the grid cell and precision of the measurement location has relatively small impact on the measured thickness. This is important especially if the measuring is done by hand because a human operator might not be able to measure the thickness in an exact place corresponding to a certain pixel.

- Obtaining pixel values from the sample surface image in points corresponding to each measurement point. If grid is used, an average over a grid cell can be used instead of a single pixel value, e.g., taken from the center of the cell.

- Fitting a function to the obtained pairs of measured thickness and corresponding pixel value. A polynomial regression can be used. The value pairs for fitting can be obtained from measurements on a single spray-painted surface. It is also possible to spray paint multiple sample surfaces and do measurements on all of them. One function can than be fitted to all the pairs, or multiple functions, one for each surface, can be obtained and then combined, e.g., by averaging corresponding polynomial coefficients.

The resulting continuous calibration function can then be used to convert any brightness value, especially if obtained by the same kind of imaging and illumination device, into a thickness value. Since the imaging can be done e.g., sometimes in visible spectrum and other times (e.g., for different paints) in IR or UV spectrum or on the whole spectrum from IR to UV etc., calibration function might be specific for a certain type of imaging device. One collection can then for example contain patterns obtained by different calibration functions and by different imaging devices. The thickness is however independent from those factors so the collection can be the same regardless of imaging method(s) used to obtain it.

The calibration function can be used not only for collection preparation but also for training dataset preparation, and possibly also as a part of the machine learning algorithm, to preprocess network outputs etc. Calibration phase can be a part of the collection preparation phase, or it can be done beforehand. Similarly, the collection preparation phase can be a part of the method, or it can occur before the method starts and only the results of these phases are then used during the actual method. Since the calibration function and/or the collection can be used for many runs of the method, e.g., a user prepares the collection once and then uses the method to provide parameters for months or years to come, the collection preparation is preferably separated from the method itself or it's only an optional part of the method. At the beginning of the method, a user can have the opportunity to select a collection and/or calibration to be used, e.g., depending on what apparatus is to be set, what paint is to be used, etc., or the opportunity to provide a new collection or calibration function, if none of the previously established ones is suitable. Some calibration functions, e.g., for most commonly used paint types, can also be predefined in the method / its memory.

In each iteration, prior to combining, each algorithm output can be processed by the following steps:

- Calibrating pixels of at least part of the algorithm output with a calibration function.

- Averaging over each row or column to obtain a vector of average calibrated values. This vector is thus a representation stripe, as described above. This step thus corresponds to the simplification of outputs, as described above, and can be done even without the previous calibration step. The combining and evaluation steps are then done of the stripes, which means they are faster. The calibration function can be obtained as described above and it can be the same function as used for collection preparation or a different one.

The method can further comprise a step of displaying the iteration output spraying pattern combined from the processed algorithm outputs in at least one iteration on a displaying device. Preferably, this is done at least in a final iteration, wherein the pattern for the best profile found during the method is displayed. The user can thus visually check what the pattern would look like. The displayed image preferably comprises multiple identical rows or columns, each containing the values corresponding to the individual values of the processed algorithm output. In other words, the representative stripe is preferably displayed stretched into multiple repeated rows or columns to make it easier to see. It is however also possible to display the non-simplified iteration output.

In at least one iteration, the iteration output spraying pattern can be projected onto a 3D model of a part intended for spray-coating, wherein the part with the projected pattern is displayed on a displaying device. The pattern can thus be shown to the user not only as a flat pattern as described above, but also applied to a 3D part, e.g., representing the actual part the user intends to spray-coat after their apparatus is set with the obtained parameters.

The shortcomings of the solutions known in the prior art are to some extent also eliminated by a computer program comprising instructions which, when the program is executed by a computer, cause the computer to carry out the method according to the invention. For some variants of the method, the program needs to be run on a device comprising not only the computer, i.e., a control or processing unit, but also a display device, imaging device, a spray-coating apparatus etc. For example, if the method comprises the calibration phase, instruments needed for the calibration should be a part of the device running the method.

The shortcomings of the solutions known in the prior art are to some extent also eliminated by a computer-readable storage medium comprising instructions which, when executed by a computer, cause the computer to carry out the method according to the invention. As described above, in some cases, the computer needs to be connected to other instruments in order to run the method.

Description of drawings

A summary of the invention is further described by means of exemplary embodiments thereof, which are described with reference to the accompanying drawings, in which:

Fig 1.    Shows a schematic flowchart of the method for providing parameters for setting a spray-coating apparatus in an exemplary case 1 embodiment.

Fig 2.    Shows a schematic flowchart for an exemplary iteration of the method shown in fig. 1.

Fig 3.    Shows a flowchart of an exemplary calibration phase for the method.

Fig 4.    Shows a flowchart for collection creating phase for the method.

Fig 5.    Shows a flowchart for a case 2 embodiment iteration of the method.

Fig 6.    Shows an exemplary stretched stripe visualisation with a corresponding graph representing a thickness distribution across the width of spraying pattern simplified into the stripe, wherein a max thickness and SB50 width are marked by arrows.

Fig 7.    Shows an exemplary diagram for simplification (stripe creating) and stripe stretching.

Fig 8.    Shows a schematic graph of paint thickness across pattern width for a low-homogeneity pattern.

Fig 9.    Shows a schematic graph of paint thickness across pattern width for a higher-homogeneity pattern.

Exemplary Embodiments of the Invention

The invention will be further described by means of exemplary embodiments with reference to the respective drawings.

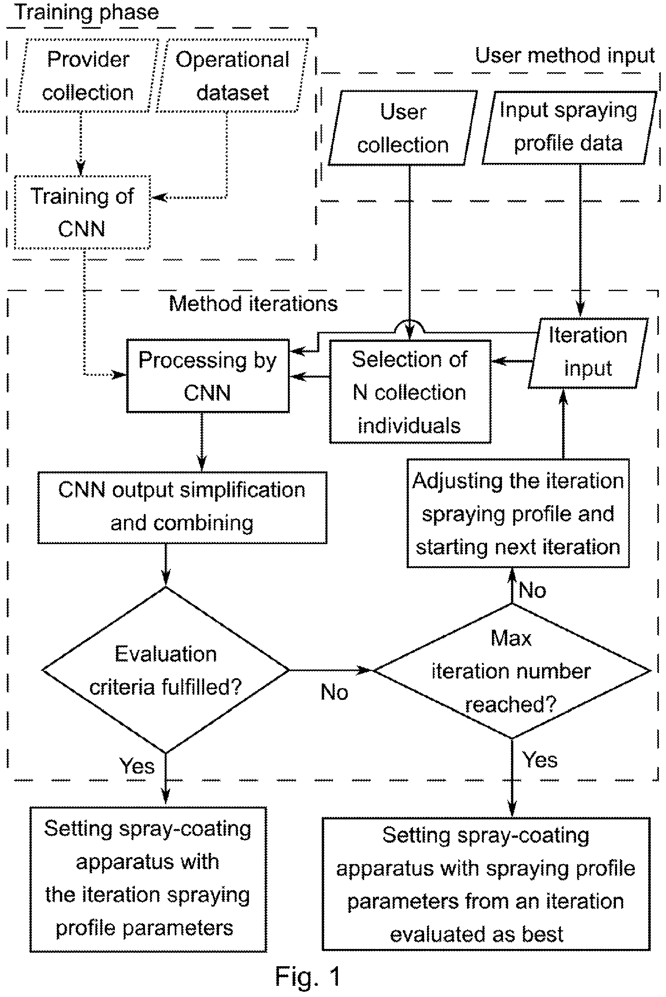

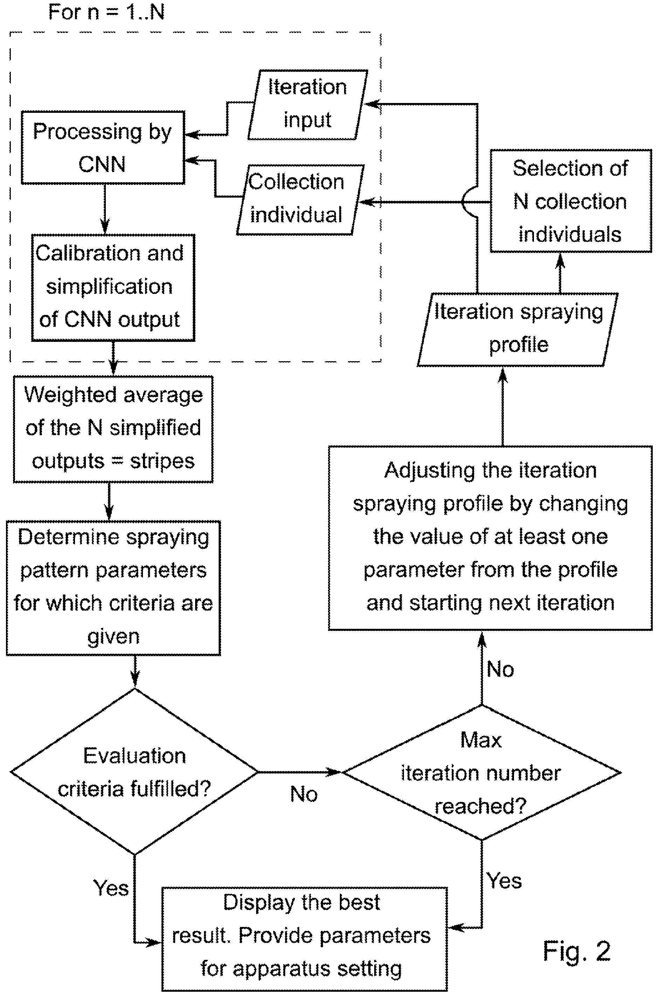

An exemplary embodiment of the method for providing parameters for setting a spray-coating apparatus is illustrated by the flowchart in fig. 1, with details describing individual iterations illustrated by the flowchart in fig.2. An integral part of the method in this embodiment is a convolutional neural network (CNN). Any suitable CNN architecture can be used for the method. A training dataset for the CNN comprises a large number (e.g., at least several thousand) datapoints, each containing a sample spraying profile, a corresponding sample spraying pattern, an operational spraying profile and a corresponding operational spraying pattern.

A spraying profile, whether it is a sample spraying profile, operational spraying profile or other kind of spraying profile, contains values for at least some spraying profile parameters, e.g., as required by a specific spray-coating apparatus. A spraying profile is thus basically a point or a vector in a multidimensional spray-coating parameter space. In this space, a metric, i.e., a prescription for measuring distance between profiles, can be established. Several possible applications of these metrices in the present method will be given below. Examples of profile parameters for three different types of apparatuses are given in table 1 below. A spraying profile can comprise any combination of those, and other parameters are also possible in alternative embodiments. In some embodiments, each profile in the dataset and/or each profile used further in the method can comprise values of the same parameters. It is however also possible to train the method on profiles having values for different parameters, e.g., having some parameters unspecified.

*Table 1: Examples of spraying profile parameters for various spray-coating apparatus types.*

| Gun | Rotary Bell Monoshape | Rotary Bell Dualshape |
|---|---|---|
| PaintFlow | PaintFlow | PaintFlow |
| Shape | Shape | Shape1 |
| Atom | RPM | Shape2 |
| Speed | HV | RPM |
| TCP | Speed | HV |
| Viscosity | TCP | Speed |
| Solid content | Viscosity | TCP |
| | Solid content | Viscosity |
| | | Solid content |

*Table 2: Description of spraying profile parameters from table 1.*

| Parameter | Parameter description |
|---|---|
| PaintFlow | Flow of used material |
| Shape | Flow of compressed medium which controls size of pattern |
| Atom | Flow of compressed medium which controls quality of atomization |
| RPM | Rotation speed of bell disk which controls quality of atomization |
| HV | Variable which controls Electro static |
| Speed | Velocity of robot arm |
| TCP | Distance between applicator and surface |
| Viscosity | Viscosity of used material (paint) |
| Solid content | Solid content of used material (paint) |

For a specific spraying profile, a specific spray-coating apparatus can produce a spraying pattern, e.g., a certain quantity of paint can be sprayed over the surface and the distribution of the paint is influenced by the parameters, as well as by the apparatus itself (e.g., by the type of apparatus, wear of its nozzle etc.). A spraying pattern, corresponding to a specific profile, can thus be produced, especially by imaging (e.g., using a camera) the sprayed sample surface and then preferably calibrating the image (especially by cropping the image, if needed, and transforming the image pixel values into paint thickness-representing pixels, as will be described below). The cropped part can e.g., be centered in the image. Each spraying pattern thus represents 2D distribution of paint thickness. The sample surface can be for example a sampling foil, a metal sheet, or even a surface or part of surface of an actual part intended for spraying in given spraying facility.

Sample spraying profiles represented in the dataset are chosen to represent the whole parameter space or a certain subspace of it, e.g., a subspace where spraying profiles for real applications are expected to lie. The subspace can thus be limited in each dimension by an interval of values for given parameter which can realistically occur in practical applications. The sample spraying profiles are thus preferably substantially uniformly distributed in the (sub)space. For example, in each dimension (i.e., for each parameter), several equidistant values containing border points of the realistic interval chosen by a skilled person and several points in-between can be chosen. The sample spraying profiles can then be all possible combinations of these values in each dimension or a subset of these all possible combinations (e.g., randomly chosen subset). The sample spraying profiles however do not have to be exactly uniform, e.g., do not have to be exactly equidistant in a specific dimension. A skilled person can choose the sample profiles as they see fit in order to approximately represent the required parameter (sub)space. In some embodiments, the sample spraying profiles can e.g., be chosen randomly. The sample spraying profiles together with their corresponding sample spraying patterns thus provide data describing how the paint thickness distribution changes when the parameters change. The sample spraying patterns can all be provided by a single apparatus but can also be provided by multiple apparatuses. In some embodiments, a user collection or union of several such collections can be a source for sample spraying profiles and patterns for the training dataset. The collections will be described in more detail below. The training sample patterns can cover the parameter (sub) space more finely than the user collections, they can be provided for different paints, on several different apparatuses etc. The user collections, on the other hand, can be more limited, since the specific user's expected range of applications and their options or needs with respect to using different paints or apparatuses can also be more limited. The training sample profiles can advantageously represent the parameter subspaces needed by any potential user.

The operational spraying patterns and their corresponding profiles are provided by multiple different apparatuses from multiple different places (factories, plants, labs etc.), maintained by different technicians, in different stages of wear etc. The parameters can thus correspond to real applications in industry. They do not have to be chosen as representative of the whole parameter (sub)space. For example, a database of such patterns and profiles can be created by collecting individual datapoints (profile + pattern) from various users of spray-coating apparatuses over a longer period of time. This data are thus unlikely to be biased by faults or wear of specific apparatus, since they are obtained from many different apparatuses. The sample spraying patterns described above can by biased by such a fault, by a wear of a nozzle or other component, by incorrect apparatus configuration etc., since the sample pattern are generally obtained from a single source or only a few sources. Combining the sample data with the operational data into the training dataset can remove this bias and thus significantly improve the dataset quality. The trained neural network can then generalize much better and will provide more accurate data.

Each datapoint in the training set thus comprises two types of data - sample data, which can be obtained by a single party, e.g., the skilled person setting up the method and distributing it to their customers, and operational data, which are obtained from multiple sources, i.e., multiple plants, factories or other facilities having spray-coating apparatus(es). The sample data can provide a substantially uniform coverage of the relevant parameter sub-space, but it can be biased. The operational data are less likely to be biased, but obtaining such data, which would also systematically cover whole subspaces, would be very impractical if not virtually impossible. Combining the two types of data combines advantages of both - reasonably unbiased information with reasonable difficulty of collecting the data.

In the training, the operational spraying patterns are used as labels. E.g., the operational spraying profile, the sample spraying profile and the sample spraying pattern are used as inputs and the network parameters are optimized by training to produce the corresponding label - operational pattern. A part of the dataset can be used as a validation dataset to check for and prevent overfitting, as is usual in neural network training.

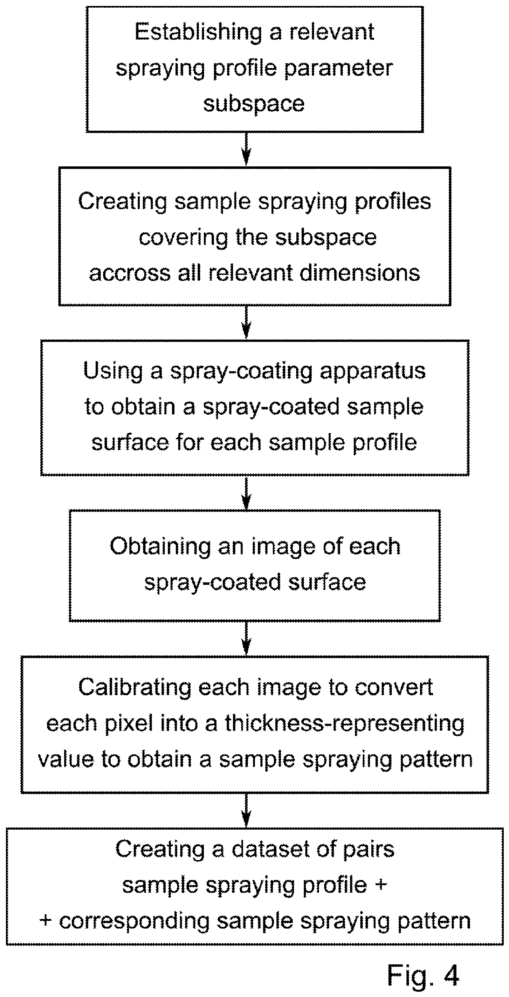

Another significant tool used in the method, which is used together with the CNN, is a collection of sample spraying patterns and corresponding sample spraying profiles. This collection is preferably created by the user of the method, i.e., it does not need to be provided by the provider who creates the training dataset and trains the network. The collection is used to introduce user-specific conditions into the neural network processing and the neural network outputs. The collection phase for creating this dataset is illustrated in fig. 4. Obtaining the sample profiles and patterns for network training dataset can follow the same procedure. The network (when receiving as an input a specific profile and a sample profile and a corresponding sample pattern from the collection) can then produce spraying profile that relatively closely resembles actual spraying profile which would be produced by the user-specific apparatus used to create the collection, if this apparatus was set up with the inputted profile. The sample spraying profiles are chosen such that they substantially uniformly cover a spraying profile parameter subspace relevant for the specific user. E.g., the values chosen do not have to be exactly uniform or equidistant (as described above for the sample profiles in the training dataset), but they are preferably spread out over the whole subspace, not significantly clustered in only a smaller part of the subspace, unless this part is more relevant than the rest. The use of collection thus enables the network to provide more realistic outputs, by complementing the relationships between profiles and patterns learned from the training dataset, which is relatively general, with data describing conditions at the user's spraying facility.

In an embodiment, which will be further referred-to as case 1, and which can be a specific variant of the embodiment from figs. 1 and 2, an input for the method is a user-determined spraying profile. The method, in case 1, allows the user to simulate, what the spraying pattern for the spraying profile will look like, what its pattern parameters will be, evaluate these parameters and tweak the profile if the evaluation is not satisfactory. It thus basically provides a faster, cheaper and more accurate alternative to setting the apparatus, spraying a sample surface, visually checking if the pattern is acceptable, and then setting the apparatus with user-adjusted profile and repeating the whole process until a suitable profile is found.

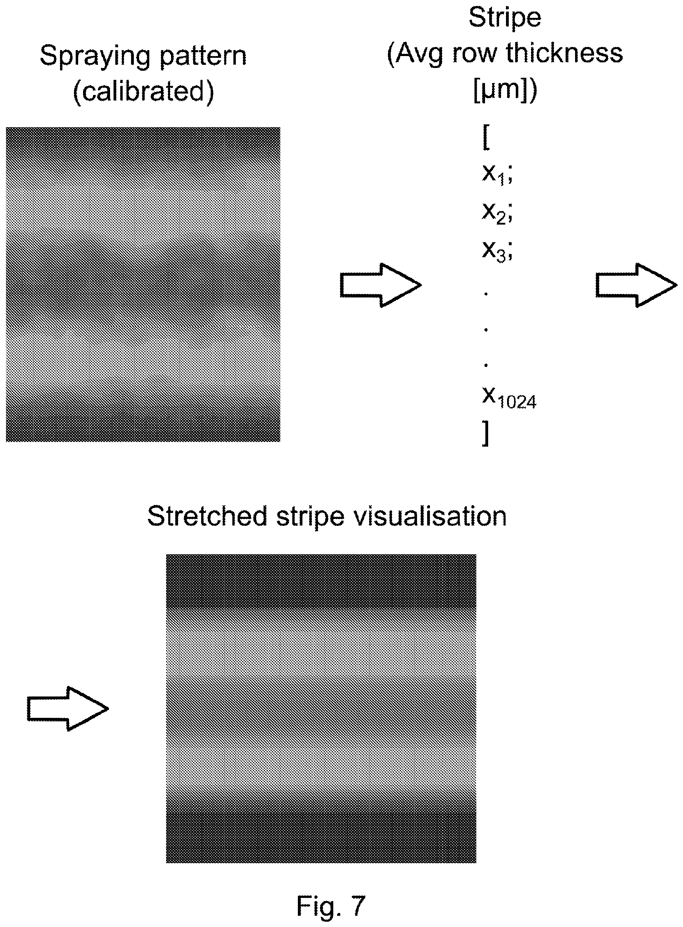

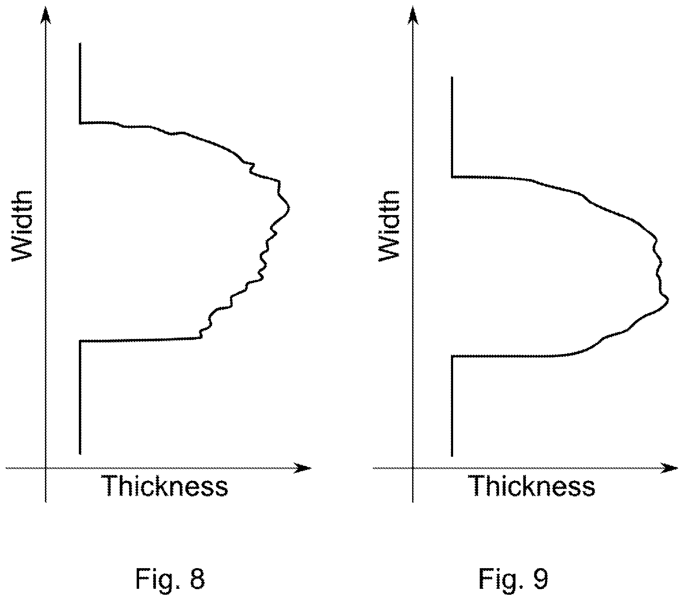

The pattern parameters can be for example one or more of transfer efficiency, homogeneity of spray-coating, spray-coating thickness, and spray-coating width (e.g., so-called SB50). A spraying pattern, produced by an apparatus with application element (nozzle) moving along the sprayed surface, generally has the highest thickness in the middle (along the same direction in which the application element moves) and decreasing thickness on the sides (see the pattern in fig. 7). Homogeneity describes basically how similarly or differently the thickness decreases towards the opposite sites (see figs. 8 and 9 for comparison of low-homogeneity pattern (fig. 8) and relatively high-homogeneity pattern (fig. 9)). Homogeneity can for example be measured from a representative stripe. It can then be measured e.g., by finding a max thickness value and measuring thickness of the stripe certain distance to the left and to the right of the maximum. Difference between the measured thicknesses or sum of squares of several such differences for multiple pairs of measurements at different distances from the maximum, can then be compared to a threshold. Homogeneity can also measure how much a thickness distribution varies along a pattern, that is, along the spraying direction or nozzle movement direction. Then it can for example be measured by measuring SB50 in multiple places along the pattern and determining a sample variance of these width measurements. If the variance is below a certain threshold, the pattern can then be considered homogeneous.

Transfer efficiency describes how much of the paint leaving the application element (and thus used in the spraying process) gets transferred to the target surface, as opposed to being dispersed in its surroundings, dripping downwards etc. It can be calculated as

$$TE = vol / ((effW / spd) * (pf * (solid / 100)) / 60) * 1000,$$

where TE (%) is the transfer efficiency, vol (mm3) is volume of the used paint, effW (mm) is width of the measured pattern, spd (mm/sec) is applicator speed, pf (ml/min) is paint flow, and solid is a solid content (%) of the paint.

The spray-coating width is usually determined as a distance between two points having the same (non-maximum) thickness in a certain cross-section of the pattern (with the section plane perpendicular to the application element movement direction). When the two points selected have thickness equal to half the maximum thickness in between the points, their distance is referred to as SB50. For a given pattern, the width can be measured/determined in a predetermined cross-section, it can be an average over several predetermined or randomly chosen cross-sections, it can be an average over the whole pattern length etc. A spray-coating thickness can e.g., be measured from a representative stripe by finding a max value in the stripe.

An initiation phase of the method includes at least receiving input data from the user and receiving or being given access to the user collection. The method can generally also include a set-up phase, which can but does not have to be done by the user, it can be done prior to starting the method by a provider and thus does not have to occur during each method run. In the set-up phase, some method parameters, such as value of N, metric(s) used, criteria used for evaluation and values for them, score calculation formula, optimization method parameters, max number of iterations, calibration function etc., can be chosen (the meaning and impact of these parameters will be explained further below). In different embodiments, some or even all of these parameters can be chosen by the user in the initiation. The method then starts its iteration phase having at least one iteration with the following steps. These steps are also depicted in fig. 2. The following iteration describes case 1 variant of the method, case 2 which will be described further below then mainly differs in the step of adjustment.

- Receiving of an iteration spraying profile. For the first iteration, this spraying profile is received from the user, e.g., the user uses a keyboard to fill in parameter values for some or all possible parameters in a spraying profile. For subsequent iterations, if there are any, the iterating spraying profile is an output from the previous iteration.
- Selecting N collection individuals, which are sample spraying profiles from the collection. N is a predefined positive integer, e.g., from 1 to 10, preferably 3-8, e.g., 5. This value has an impact on precision of CNN outputs (larger N is better in this regard) but also on amounts of computations needed for each iteration (smaller N is better in this regard). In an exemplary embodiment, a predetermined metric in the spraying parameter space, such as a Manhattan distance (sum of individual distances for each dimension) or cosine similarity (cosine of angles between vectors) is used for selection.

  As an example, N sample spraying profiles (together with their corresponding patterns) which are closest to the iteration spraying profile by the metric can be selected. If some profiles have the same distance by the metric, one can be e.g., chosen at random. Using the closest profiles is advantageous because these sample profiles from the collection have the best resemblance to the iteration profile and their corresponding patterns should thus generally have the best resemblance to the wanted CNN output profile and the collection data thus provide the most suitable user-specific data to the network so that the network can approximate an actual pattern which would be provided be the user's apparatus. Alternatively, it is e.g., possible to select 2N closest profiles from the collection and select a half of them at random, it is possible to include a farther sample profile with N-1 closer or closest profiles etc.

- Using the CNN. This step is repeated for each selected profile, i.e., it runs N-times before the combining step described below can start. The iteration profile and one of the selected profiles with the corresponding sample pattern are inputted into the neural network. A network output (generally a machine algorithm output if a different algorithm is used) is thus produced. This output is basically the network's expectation of what an actual spraying pattern for the iteration profile would look like.

- Calibration of network outputs. Each output can be calibrated. In some embodiments, the CNN can include the calibration so the step might be omitted here. A calibration function describing the relation between pixel value in an actual image of a sprayed surface and a thickness of the paint on this surface is used. The calibration function thus transforms each pixel from a value describing color, brightness etc., into a thickness value in $\mu$m. In other words, if the network outputs a visual representation of how a real sprayed part or surface would look to an observer, the calibrated image represents how thick the paint is expected to be at each point/pixel. Paint thickness is one of the most important pattern parameters and can be evaluated (by a computer) easier than a visual pattern.

- Simplification of the calibrated outputs. So-called representation stripes, or just stripes, are created in this step (see fig. 7). The network output can be cropped at the beginning of the step, but it can also be used whole. The cropping can, in some embodiments, also take part before the calibration. For each row or column of the (cropped) image, an average value is computed and saved as a corresponding stripe (vector) element. In some embodiments, this averaging and creating a vector from the 2D image can take place before the calibration.

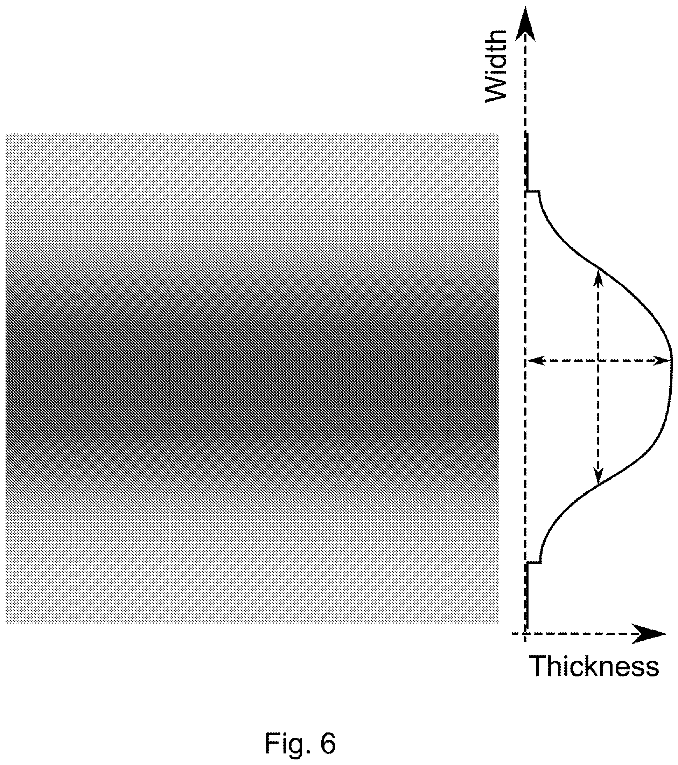

The creation of the stripes significantly decreases computational demands and speeds up the method, without significantly compromising accuracy of the results. Example of the thickness distribution (calibrated) image, the stripe and also a stretched stripe which can be used to display the stripe data on a display device to the user and which is a 2D image of the stripe repeated many times, is shown in Fig. 6. In some embodiments, this step might be omitted and not-simplified 2D images can be used in further steps.

- Combining the N stripes. A one common output is created from the N (calibrated and simplified) outputs. Averaging of the stripes, e.g., calculating an average of first elements from all the stripes and saving it as a first element of the combined stripe and so on, can be used. Weighted average can be used, especially with weights given by normalized values of the metric used to select each given sample profile from the collection, i.e., with the average being more impacted by network outputs produced from sample profiles closer to the iteration profile. The normalization is important, regardless of whether the metric or some other way is used to determine the weights, so that the combined stripe still describes thickness in the same units, e.g., microns.

- Determining values of spraying pattern parameters from the combined stripe. The exemplary pattern parameters were explained above. They can be obtained from the stripe analogically to obtaining them from a 2D image. E.g., SB50 can be a distance (in pixels or mm) between two pixels with values half that (e.g., the closest pixel for which the value is less than half of the max value on each side from the max value) of the max thickness in the stripe. Maximum or average thickness can be computed from the stripe. Homogeneity can be defined as any suitable measure of difference in how much the thickness values decrease to side of the maximum and to the other side of the maximum. In the set-up phase, it can be established which of these or other parameters will be checked for, i.e., which will be used to determine, whether the iteration profile can be actually used to set-up the spray-coating apparatus, or it needs to be adjusted.

- Evaluation. In this step, the determined values from the previous step are compared to the criteria given in the set-up phase or provided by the user. E.g., it is checked whether the homogeneity is sufficient (homogeneity measure is larger than a prescribed threshold value), whether transfer efficiency is sufficient, whether SB50 and/or max thickness is within a prescribed interval etc. Multiple criteria can be used. In some embodiments, a common score reflecting several criteria can be used and then compared to a prescribed score threshold. Profile parameters, such as paint flow, can also be used as criteria, together with or instead of (some of) the pattern parameters.

Exemplary score can be given by this formula: score = (mxE * mxW) + (sbE * sbW) + pfE, where mxE is a deviation (in %) of the determined max stripe thickness from a target max thickness (e.g., given by the user in initiation); mxW is relative weight (importance) of meeting the prescribed thickness, as opposed to the importance (weight sbW) of meeting a prescribed SB50; sbE is then a deviation (in %) of the determined stripe SB50 from a target SB50 (e.g., given by the user in initiation). pfE is analogically defined as a deviation (in %) of the iteration profile paint flow from the target paint flow (which is thus also given by the user in initiation in this embodiment).

The deviations can be computed as (determined_parameter - min_target_parameter) / (max_target_parameter - min_target_parameter), where parameter in this embodiment is mx, sb, or pf (see above), if the parameters are prescribed by the user as intervals given by min and max values. With such a score formula, more parameters can be easily added if they need to be reflected in the method and their relative importance to the user is also taken into account. For this score, a lower score value is better. Different score formulas can naturally be used in different embodiments.

In any embodiments, the evaluation can also be done by comparing a value of a spraying pattern parameter from the combined stripe with at least one threshold value. E.g., if SB50 is between two predetermined thresholds, i.e., in a given interval, the evaluation criterion is fulfilled. Multiple parameters can be evaluated, and their respective threshold can be predetermined. The evaluation step is then successful, e.g., if all the parameters for which thresholds were given satisfy the comparison with the thresholds.

- If the evaluation is successful, i.e., the criteria are fulfilled / the score is low enough, the iteration spraying profile is suitable and its parameters can be outputted from the method. For example, they can be sent to the user who then sets up their apparatus accordingly, or the control unit running the method can set the apparatus with the parameters automatically, e.g., as a configuration program or file for the apparatus.

- If the evaluation is not successful but max number of iterations was reached, no further iteration is possible. For this eventuality, a variable with the best application profile (according to the criteria) reached so far can be established and updated in each iteration, if the profile is better than the previously best profile saved in this variable. The best profile can e.g., be the one with highest score, if score is used, with lowest sum of differences of determined parameters from target parameters etc. When the method ends by running out of iterations, the best profile can be used and its parameters can be outputted by the method. In can then be up to the user to decide whether they actually use these parameters for setting their apparatus, or they input it into the method as an input spraying profile for another run and further optimizing, or they can change some constraints etc., to increase a likelihood of success in subsequent method runs.

In fig. 2, this step and the previous step are depicted as the same block in the flowchart since they both end the method by providing the profile or its parameters. The profile is however a different one, either complying with all the criteria or not complying and only being the best suitable found so far in the method. Information describing which of the two possibilities occurred is preferably explicitly provided to the user.

- If the evaluation is not successful and more iterations are possible, the iteration spraying profile needs to be adjusted so it can be used as an iteration profile for the next iteration. A random parameter change can be used in some embodiments for the adjustment, e.g., a random parameter (or multiple parameters) from the profile is selected and it is randomly changed (e.g., replaced by a random number generated from a given suitable range for the corresponding parameter, or multiplied by a random number from 0.75 to 1.25, etc.). The result can be used as the iteration profile for the next iterations.

The adjustment thus preferably uses a (pseudo)random number generator, especially to replace a value of one randomly selected parameter from the iteration spraying profile with a random number from an interval given by constraints (e.g., provided by the user according to their needs and applications). If constraints are not given by user, they can be e.g., determined from the collection used for the method as the highest and lowest values of the parameter present in any profile in the collection. Similarly, they can be taken from the training dataset (e.g., default parameter constraints can be present in the method which are used if no other constraint values are provided) which generally has larger intervals since it covers a larger subspace in order to be general enough for any possible application of any possible user.

In fig. 1, the training phase steps are shown in dotted lines because they can in some embodiments be a part of the method, but generally they happen beforehand. Even if they are a part of the method, these steps only happen once (in order to produce the CNN used for processing data in iterations), unlike the iteration steps which are generally repeated many times.

The calibration function mentioned above, can for example be obtained by the following process - calibration phase, which can in some embodiments be a part of the method, while in others it may precede the method, any in yet other embodiments the calibration can be done by some other way. The calibration function can be used for calibrating the network outputs, as explained above, or for creating the sample spraying profiles (for collection as well as for CNN training) or operational spraying profiles.

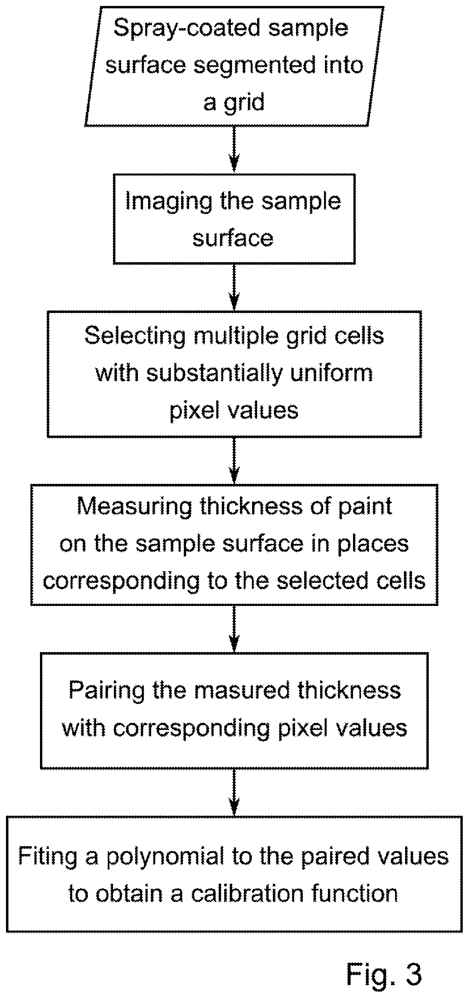

The calibration function can be obtained in a calibration phase, as depicted in exemplary flowchart in fig. 3, which might be e.g., paint-specific, e.g., for different paint an individual calibration function might be obtained, and/or apparatus-specific etc. The calibration function is preferably user-specific, i.e., inputted to the method during set-up / initiation phase by the end user of the method. The calibration phase can have the following steps:

- Obtaining at least one sample surface spray-coated by a spray-coating apparatus. Multiple surfaces can be used and measurements from them combined. The sample surface can be e.g., a transparent foil (so-called calibration foil or sampling foil) with a grid painted thereon, or metal sheet. Using the calibration foil is advantageous since light can pass through it so it is easier to illuminate for imaging and it can comprise patterns or elements for facilitating positioning of the sprayed pattern in the image etc. It is however also possible to use a real spray-painted part with non-planar surface, such as a car bumper, for the calibration phase. Preferably, the paint used for this spraying for calibration is the same kind of paint (e.g., the same type from the same manufacturer, or at least has the same viscosity, color, etc.) as the paint which will be used in the method, i.e., with which the apparatus configured with the method-obtained parameters will then spray real parts when it's in operation. It can also preferably be sprayed by the same kind of spray-coating apparatus or even the same apparatus.

- Imaging the sample surface. A standard camera providing pictures in color can be used. Multispectral light can be used for imaging, e.g., both visible and infrared or ultraviolet. For some paints, visible light might be sufficient. A line-scan camera can also be used. Any device comprising an illumination system, optical system and light sensing system can be used.

- Measuring thickness of the paint on the sample surface in multiple points on the sample surface. A special paint thickness measuring device (paint thickness gauge), e.g., Elcometer® can be used. The grid on the foil can facilitate easier orientation in the pattern during measuring. Parts of the grid with homogeneous thickness are preferably used for the measurements. Since the homogeneity can be determined even from the non-calibrated picture obtained in the previous step, a control unit can be used to recommend grid coordinates where pixel intensity is the most homogeneous and measurements can then be made by hand in the recommended cells. Automatic thickness-measuring can also be used in some embodiments.
  The measuring can be done in a wet state of the paint or in a dried state. It might also be possible to combine both wet and dried measurements in different patterns in a collection of training dataset. Measuring in wet state is possible with the method using an imaging device and calibration function and might then be advantageous since time and/or energy does not have to be spent on drying of the paint, e.g., heating it.

- Obtaining pixel values from the sample surface image in points corresponding to each measurement point. E.g., an average pixel value over each recommended grid cell can be used and paired with the corresponding thickness.

- Fitting a function to the obtained pairs of measured thickness and corresponding pixel value. Any suitable regression method, preferably polynomial, e.g., least squares, can be used.

The resulting calibration function can then be used to transform pixel values (e.g., light intensity), obtained by an imaging or capturing device, into thickness values. The calibration phase can be done by the same processing unit which runs the method. E.g., a computer can prompt the user to provide the sample surface image or can be connected to the imaging device and prompt the user to put a painted foil or other surface into the imaging device. It can then give the user grid coordinates where measuring should take place and receive the measured thickness values, or even uses an automatic thickness measuring device to measure the thickness in given grid cell without the need of human assistance. Pixel values in corresponding cells can be obtained automatically by the computer from the image and the regression can also be done automatically. The user can however for example be asked to input an order of the required polynomial calibration function etc. The computer can then save the calibration function obtained, e.g., pair it with the paint used in its database for use in further runs of the method for the same paint, and retrieve it whenever needed, e.g., based on paint data from a provided spraying profile at the start of a particular method run.

A collection preparation phase, in which the user can prepare their specific user collection, from which the selection is then made in each iteration, can have the following steps:

- Preparing a set of sample spraying profiles. These profiles preferably cover the relevant subspace, as was described in more detail above.

- For each of the prepared profiles, obtaining a corresponding sample spraying pattern by imaging a sample surface spray-coated by a spray-coating apparatus set with parameters from given sample spraying profile, and then by calibrating pixels of the image with a calibration function. Multiple different sample surfaces can be used for preparing the collection in some embodiments. One or more apparatuses can be used for the preparing. One or more different paints can be used. In some embodiments, the collection can be prepared on a different apparatus and/or with a different paint than the paint that will be then used in the method and the apparatus for which parameters will be provided by the method. Elements in the collection can then be transformed to be more suitable for the paint/apparatus actually used. For example, if the collection is prepared for paint A, with a known (and invertible) calibration function, and a calibration function is also known for a paint B, these two calibration functions can be used to transform the patterns in the collection into form suitable for paint B.

The calibration function used can be obtained as described above, i.e., be spray-coating, imaging and measuring a sample surface and then fitting a function.

The combined output provided in an iteration, especially if it's an iteration in which evaluation was successful, can in some embodiments be projected onto a 3D model of an object for spray-coating. The model with the projection can then be displayed on a display device, such as a computer screen. The user can then check, what the object, e.g., a car bumper, if the user provides car bumper spray-coating, would look like after spray-coating with the iteration profile used to set the spray-coating apparatus. The 3D model of the part can thus also be provided as one of the inputs for the method, or the produced pattern can be inputted into a CAD software together with the model.

The simplification, e.g., transforming a 2D spraying pattern into a stripe, can be used in multiple phases and steps of the method and/or its preparation. For example, each pattern used in the method or its preparation can be in the form of a representative stripe. E.g., training dataset contains representative stripes obtained from calibrated pattern images, collection comprises stripes, neural network is inputted with stripes and outputs an expected pattern in the form of a representative stripe etc. The amount of data that needs to be stored, e.g., in the database and/or collection, is thus significantly reduced. Training of the network can be simplified by using the stripes instead of the whole spraying patterns, since a hight amount of noise is present in each pattern and the simplification can help by removing much of the noise. The convolutional layers can then work with 1D representative stripes. The calibration function can also be applied to some of the convolutional layers.

An example of a suitable CNN architecture which can be used in the present method is for example so-called U-net architecture: The U-Net architecture is a type of convolutional neural network (CNN) that was originally developed for biomedical image segmentation but has since been applied to various other image segmentation tasks. The name "U-Net" comes from its shape, which resembles the letter "U".

The U-Net architecture has two parts: an encoder and a decoder. The encoder is a series of convolutional layers that extract features from the input image. The decoder is a series of transposed convolutional layers that use the extracted features to generate a segmentation mask. The U-Net architecture also includes skip connections, which allow the decoder to access features from the encoder at multiple scales. Specifically, the output of each encoder layer is concatenated with the output of the corresponding decoder layer, which helps preserve spatial information and improve segmentation accuracy.

The U-Net architecture has several advantages over other CNN architectures for image segmentation. For example, its skip connections enable it to handle objects of different scales and maintain spatial information, and its symmetric structure allows it to generate precise segmentation masks. As a result, the U-Net architecture has become a popular choice for image segmentation tasks in many domains.

This architecture has the following basic parts:

1) 2D Convolution Layer: A convolution layer is a core building block of a CNN. A 2D convolution layer applies a set of learnable filters to the input image or feature map. Each filter performs a convolution operation by sliding across the image or feature map and computing dot products at each location. The result is a set of output feature maps that capture different aspects of the input.

2) Fully Convolutional Network (FCN) Layer: A fully convolutional network layer is a type of layer that replaces the fully connected layers in a traditional neural network with convolutional layers. FCN layers are commonly used in image segmentation tasks, where the output is a dense pixel-wise prediction. The final output of an FCN layer is a feature map that can be upsampled to the same size as the input image or feature map.

3) Max Pooling Layer: Max pooling is a type of pooling layer that downsamples the input feature map by taking the maximum value within a local window. Max pooling is used to reduce the spatial resolution of the feature maps and increase their robustness to small variations in the input.

4) 2D Transpose Convolution Layer: A 2D transpose convolution layer (also known as a deconvolution layer) is a type of layer that performs the inverse operation of a convolution layer. Instead of taking a small input patch and producing a single output value, a 2D transpose convolution layer takes a larger input feature map and produces a smaller output feature map. This is achieved by sliding a filter across the input feature map and computing dot products at each location, while also performing upsampling to increase the output resolution.

5) Smoothing: Smoothing refers to the process of reducing high-frequency noise or sharp transitions in an image or feature map. In the context of CNNs, smoothing can be achieved by applying a low-pass filter (such as a Gaussian filter) to the input image or feature map before passing it through the network. This can improve the robustness and accuracy of the network by removing irrelevant details and preserving important structures.

6) Batch Normalization Layer: A batch normalization layer is a type of layer that normalizes the inputs of a neural network by subtracting the mean and dividing by the standard deviation, calculated over a mini-batch of training samples. Batch normalization can help alleviate the problem of internal covariate shift, which is caused by the distribution of the inputs changing as the network learns.

This architecture is however only an example. Other suitable architectures can be determined by a skilled person and used as the machine learning algorithm for the present method.

In case 2, the method receives at least partially different inputs than in case 1 and the adjusting step is also different. While case 1 is intended to check whether a profile provided by the user is suitable, improve it if it's not, and optionally digitally visualize the spraying pattern which would be produced by the profile, in case 2, the user provides some parameter boundaries, especially for spraying pattern parameters, but optionally also for spraying profile parameters, and a suitable profile is produced for them using the CNN and an optimization method incorporated into the method's iterations.

The CNN and collection used in case 2 can be the same as described above for case 1. The set-up or initiation phases can also generally be as described above. Before iterating, the method receives optimization constraints from the user. The constraints contain at least one target value for at least one spraying pattern parameter. They can contain interval(s) for the target parameters or desired values for them or combination of both. They can also contain weights describing the importance of meeting the prescribed thickness for the user (see the score-describing paragraph above for more details about exemplary weights mxW or sbW). In this embodiment, the optimization algorithm used is simulated annealing, so a starting temperature is also determined in the set-up or initiation.

During initiation phase, the below given steps for obtaining the score are used to get an input profile score for an input spraying profile. This spraying profile can be randomly generated, optionally with the random values meeting prescribed profile parameter values, if any were given by the user. In some embodiments, it is also possible to receive the input profile from the user.

The method in this embodiment can than have the iterative steps as follows:

- Receiving an iteration spraying profile. For the first iteration, it is the input profile, and an iteration temperature is set to the starting temperature. For subsequent iterations, it is a profile provided by the previous iteration.
- Adjustment of the iteration spraying profile by randomly changing at least one of its parameter values (random mutation). For example, the value can be multiplied by a random number from 0.75 to 1.25, replaced by a random number from an interval of realistic parameter values (which is the more preferred way) etc. The adjusted profile is then used in the following steps. For the first iteration, if the input is randomly generated, this random adjustment can be skipped.
- Selecting N collection individuals. This step can be carried out as described above for case 1.
- Using the CNN N times. The features of this step can also be realized as described above for case 1.
- Calibration of network outputs and (optional but advantageous) simplification of the calibrated outputs, followed by combining the N outputs/stripes. See above for more details on these steps.
- Determining values of spraying pattern parameters for which a constraint was given. The features of this step can be realized as described above for case 1.
- Evaluation. A score is calculated for the determined values. The score basically measures how well the constraints - criteria for evaluation, are met by the iteration profile. An example of score formula suitable for this step is also given above in description of case 1. A different score can also be used, e.g., reflecting different parameters or measuring the deviation between the determined and target values differently.

The score can then be compared to a score threshold (e.g., prescribed in set-up or initiation).

○ If the score is better that the threshold, the iteration profile is considered suitable, outputted from the method and the method can end. Visualization can again take place, e.g., of the iteration output pattern (e.g., stretched stripe) or its projection onto a 3D model of some component for spraying. Parameters are provided for an apparatus setting or the apparatus can be set with the parameters by the control/computing/processing unit implementing the method.

○ If max number of iterations was reached, a best profile found so far can be outputted, as was described in case 1 above.

○ If the score is not better than the threshold or if no threshold is used (e.g., the method always runs for the max number of iterations, for a prescribed max time etc.), the score for this iteration is compared with the score from the previous iteration (or the input score, if this iteration is the first iteration). In other words, an offspring score is compared to a parent score. This terminology is common e.g., for evolutionary optimization algorithms, which are a suitable class of optimization methods for use in the present method.

■ If the offspring score is better, the iteration profile is used for the next iteration.

■ If the offspring score is not better, the iteration profile (as adjusted in step 2, i.e., an offspring profile) is used for the next iteration with probability proportionate to the iteration temperature. Otherwise, the profile from the previous iteration (i.e., the profile from this iteration's step 1, before adjusting - a parent profile) is used for the next iteration.

■ The iteration temperature is lowered (e.g., multiplied by a parameter smaller than 1).

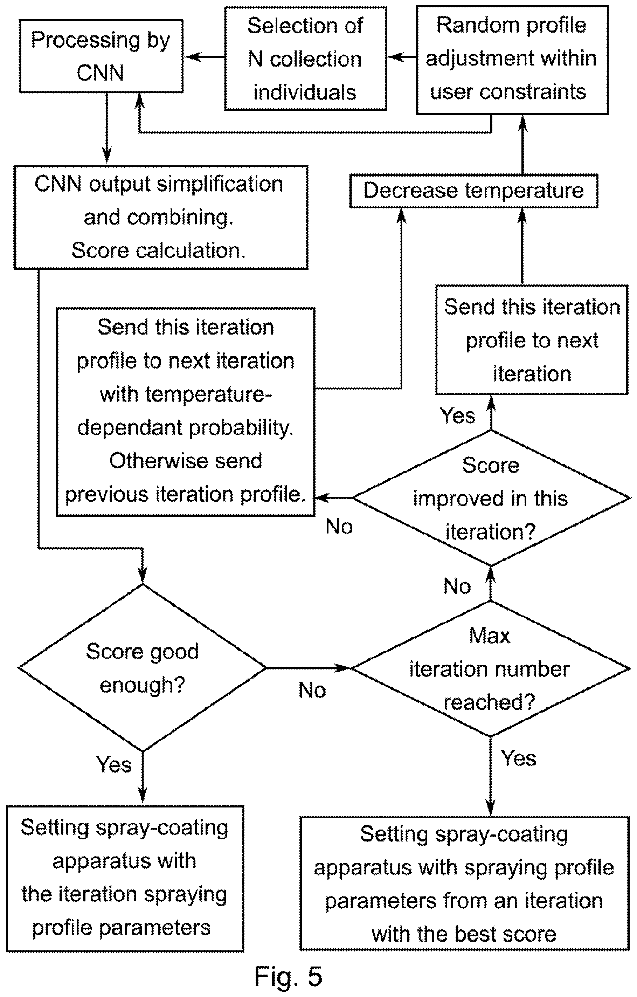

Case 2 can be considered a special case of case 1. The flowchart from fig. 1 can also represent case 2 with the above explained differences in input data and in iterations (compare fig. 2 and fig. 5). Iterations for an embodiment of case 2 are illustrated in fig. 5. The adjustment step in case 2 is described here as taking place at the start of the iteration for simplicity. However, it could be described as taking place after the (unsuccessful) evaluation without actually changing the method's algorithm, only variable names would be changed and the input profile score would be computed as a part of the first iteration.

Any suitable optimization algorithm can be used in case 2, instead of the simulated annealing. For example, SOMA or DE optimization algorithms can be used. In alternative embodiments, a different machine learning algorithm than neural network or convolutional neural network, can be used.

In alternative embodiments, a calibration function-obtaining phase can be replaced by a direct thickness-measuring phase, e.g., using a ferromagnetic thickness measuring device. A spraying pattern (for training, collection etc.) can then by an output or an array of outputs of such measurements. In such embodiments, other features or steps can be as described above.

A computer program comprising instructions which would cause a device comprising at least a computing or control unit with access to a user collection and to a trained neural network, to carry out the method in an embodiment described above, is another exemplary embodiment of the present invention. The device can further comprise a display device, an imaging or capturing device, user input device, calibration function database stored in a memory etc. A computer storage medium with those instructions is another embodiment of the invention.

**Claims**

1. Method for providing parameters for setting a spray-coating apparatus, the method utilizing a control unit and a machine learning algorithm implemented by the control unit, **characterized in that** it further utilizes a collection of sample spraying patterns and corresponding sample spraying profiles, wherein

   the algorithm is trained on a training dataset where each datapoint contains at least a sample spraying profile, a corresponding sample spraying pattern, an operational spraying profile and a corresponding operational spraying pattern, wherein the operational spraying pattern corresponds to a label for the training,
   wherein each spraying profile contains values of multiple profile parameters,
   each sample spraying pattern represents a distribution of paint thickness provided by a spray-coating apparatus on a sample surface for a specific sample spraying profile, and
   each operational spraying pattern represents a distribution of paint thickness provided by a spray-coating apparatus on a sample surface for a specific operational spraying profile,

   wherein the sample spraying profiles in the collection belong to a multidimensional parameter sub-space defining an expected range of spray-coating applications, the sample spraying profiles in the training dataset belong to a multidimensional parameter sub-space defining a training range of spray-coating applications, wherein the training range sub-space is in at least some dimensions more finely covered by the sample spraying profiles and/or is broader than the expected range sub-space, and wherein the operational spraying patterns are provided by multiple different spray-coating apparatuses from different spray-coating facilities, wherein the method comprises at least one iteration, each iteration comprising the following steps:

   • Receiving an iteration spraying profile;
   • Selecting N sample spraying profiles with N corresponding sample spraying patterns from the collection, wherein N is a predefined positive integer;
   • Inputting the iteration spraying profile and one of the sample spraying profiles with the corresponding sample spraying pattern into the algorithm and receiving an algorithm output describing an expected spraying pattern for each of the N selected sample spraying profiles;
   • Combining the N algorithm outputs into an iteration output spraying pattern;
   • Evaluating the iteration output spraying pattern according to a predetermined criterion;
   • Adjusting the iteration spraying profile and providing it as an iteration spraying profile for next iteration if the iteration output spraying pattern does not comply with the criterion, or using profile parameters from the iteration spraying profile as parameters for setting the spray-coating apparatus if the iteration output spraying pattern does comply with the criterion.

2. The method according to claim 1 **wherein** prior to the first iteration, the method comprises a step of receiving at least one target value for at least one spraying pattern parameter, wherein in each iteration, the step of combining comprises determining iteration spray-coating pattern parameters from the iteration output spraying pattern, and the method further comprises a step of determining a score based on a distance between the target values of the spray-coating pattern parameters and the values or iteration spray-coating pattern parameters according to a predefined metric, wherein based on the score the iteration spraying profile is either randomly adjusted and provided as an iteration spraying profile for next iteration or its parameters are used to set the spray-coating apparatus.

3.  The method according to claim 2 **wherein** the iterations of the method are realised as iterations of an evolutionary optimization algorithm.

4.  The method according to any of the preceding claims **wherein** the method further comprises a step of receiving a constraint for at least one spraying profile parameter, wherein when the iteration spraying profile is adjusted, a new value of the at least one spraying profile parameter complies with the constraint.

5.  The method according to any of the preceding claims **wherein** in the step of selecting, N spraying profiles closest to the iteration spraying profile based on a predetermined metric are selected.

6.  The method according to any of the preceding claims **wherein** in the step of evaluation, at least one spray-coating pattern parameter selected from transfer efficiency, homogeneity of spray-coating, spray-coating thickness, and spray-coating width is determined from the iteration output spraying pattern and the determined value is compared to at least one target spray-coating pattern parameter value.

7.  The method according to any of the preceding claims wherein in each iteration, the combining is realised as a weighted average, wherein the weight corresponding to each algorithm output is proportionate to the distance of the corresponding selected spraying profile, from which the algorithm output is produced, from the iteration spraying profile according to a predetermined metric.

8.  The method according to any of the preceding claims **wherein** the adjusting of the iteration spraying profile comprises obtaining a random number and adjusting or replacing a value of a parameter from the iteration spraying profile by the obtained random number.

9.  The method according to any of the preceding claims **wherein** the multidimensional parameter sub-space defining an expected range of spray-coating applications is substantially uniformly covered by the sample spraying profiles in the collection such that in most dimensions of the parameter sub-space, multiple different values of the profile parameter corresponding to that dimension are represented in different sample spraying profiles.

10. The method according to any of the preceding claims wherein it further comprises a collection-preparation phase comprising the following steps:

    • Preparing a set of sample spraying profiles;
    • For each of the prepared profiles obtaining a corresponding sample spraying pattern by imaging a sample surface spray-coated by a spray-coating apparatus set with parameters from given sample spraying profile and calibrating pixels of the image with a calibration function,

    wherein the calibration function is obtained by calibration phase comprising the following steps:

    • Obtaining at least one sample surface spray-coated by a spray-coating apparatus;
    • Imaging the sample surface;
    • Measuring thickness of the paint on the sample surface in multiple points on the sample surface;
    • Obtaining pixel values from the sample surface image in points corresponding to each measurement point;
    • Fitting a function to the obtained pairs of measured thickness and corresponding pixel value.

11. The method according to any of the preceding claims wherein in each iteration prior to combining, each algorithm output is processed by the following steps:

    • calibrating pixels of at least part of the algorithm output with a calibration function;
    • averaging over each row or column to obtain a vector of average calibrated values;

    wherein the calibration function is obtained by calibration phase comprising the following steps:

    • Obtaining at least one sample surface spray-coated by a spray-coating apparatus;
    • Imaging the sample surface;
    • Measuring thickness of the paint of on the sample surface in multiple points on the sample surface;
    • Obtaining pixel values from the sample surface image in points corresponding to each measurement point;
    • Fitting a function to the obtained pairs of measured thickness and corresponding pixel value.

12. The method according to claim 11 **wherein** it further comprises a step of displaying the iteration output spraying pattern combined from the processed algorithm outputs in at least one iteration on a displaying device, wherein the displayed image comprises multiple identical rows or columns, each containing the values corresponding to the individual values of the processed algorithm output.

13. The method according to any of the preceding claims **wherein** in at least one iteration the iteration output spraying pattern is projected onto a 3D model of a part intended for spray-coating, wherein the part with the projected pattern is displayed on a displaying device.

14. A computer program comprising instructions which, when the program is executed by a computer, cause the computer to carry out the method according to any of claims 1 to 9.

15. A computer-readable storage medium comprising instructions which, when executed by a computer, cause the computer to carry out the method according to any of claims 1 to 9.

**Patentansprüche**

1. Ein Verfahren zur Bereitstellung von Parametern zur Einstellung einer Sprühbeschichtungsanlage, wobei das Verfahren eine Steuereinheit und einen von der Steuereinheit implementierten maschinellen Lernalgorithmus verwendet, **dadurch gekennzeichnet, dass** es ferner eine Sammlung von Probesprühmustern und entsprechenden Probesprühprofilen verwendet, wobei

der Algorithmus auf einem Trainingsdatensatz trainiert wird, bei dem jeder Datenpunkt mindestens ein Probesprühprofil, ein entsprechendes Probesprühmuster, ein Betriebssprühprofil und ein entsprechendes Betriebssprühmuster enthält, wobei das Betriebssprühmuster einem Etikett für das Training entspricht,
wobei jedes Sprühprofil Werte mehrerer Profilparameter enthält,
jedes Probesprühmuster eine Verteilung der Farbdicke darstellt, die von einer Sprühbeschichtungsanlage auf einer Probenoberfläche für ein spezifisches Probesprühprofil bereitgestellt wird,
und jedes Betriebssprühmuster eine Verteilung der Farbdicke darstellt, die von einer Sprühbeschichtungsanlage auf einer Probenoberfläche für ein spezifisches Betriebssprühprofil bereitgestellt wird,

wobei die Probesprühprofile in der Sammlung zu einem mehrdimensionalen Parameterunterraum gehören, der einen erwarteten Bereich von Sprühbeschichtungsanwendungen definiert, die Probesprühprofile im Trainingsdatensatz zu einem mehrdimensionalen Parameterunterraum gehören, der einen Trainingsbereich von Sprühbeschichtungsanwendungen definiert, wobei der Trainingsbereichsunterraum in mindestens einigen Dimensionen von den Probesprühprofilen feiner abgedeckt wird und/oder breiter ist als der erwartete Bereichsunterraum, und wobei die Betriebssprühmuster von mehreren verschiedenen Sprühbeschichtungsanlagen aus verschiedenen Sprühbeschichtungseinrichtungen bereitgestellt werden, wobei das Verfahren mindestens eine Iteration umfasst, wobei jede Iteration die folgenden Schritte umfasst:

• Empfangen eines Iterationssprühprofils;
• Auswählen N Probesprühprofilen mit N entsprechenden Probesprühmustern aus der Sammlung, wobei N eine vordefinierte positive ganze Zahl ist;
• Eingeben des Iterationssprühprofils und eines der Probesprühprofile mit dem entsprechenden Probesprühmuster in den Algorithmus und Empfangen einer Algorithmusausgabe, die ein erwartetes Sprühmuster für jedes der N ausgewählten Probesprühprofile beschreibt;
• Kombinieren der N Algorithmusausgaben zu einem Iterationsausgabe-Sprühmuster;
• Auswerten des Iterationsausgabe-Sprühmusters nach einem vorgegebenen Kriterium;
• Anpassen des Iterationssprühprofils und Bereitstellen desselben als Iterationssprühprofil für die nächste Iteration, wenn das Iterationsausgabe-Sprühmuster das Kriterium nicht erfüllt, oder Verwenden von Profilparametern aus dem Iterationssprühprofil als Parameter für die Einstellung der Sprühbeschichtungsanlage, wenn das Iterationsausgabe-Sprühmuster das Kriterium erfüllt.

2. Das Verfahren nach Anspruch 1, **wobei** vor der ersten Iteration, das Verfahren einen Schritt des Empfangens mindestens eines Zielwertes für mindestens einen Sprühmusterparameter umfasst, wobei in jeder Iteration der Schritt des Kombinierens das Bestimmen von Iterationssprühbeschichtungsmusterparametern aus dem Iterationsausgabe-Sprühmuster umfasst, und das Verfahren ferner einen Schritt des Bestimmens einer Punktzahl auf der Grundlage eines Abstands zwischen den Zielwerten der Sprühbeschichtungsmusterparameter und den Werten oder Iterationssprühbeschichtungsmusterparametern gemäß einer vordefinierten Metrik umfasst, wobei auf der Grundlage der Punktzahl das Iterationssprühprofil entweder zufällig angepasst wird und als ein Iterationssprühprofil für die nächste Iteration bereitgestellt wird oder seine Parameter verwendet werden, um die Sprühbeschichtungsanlage einzustellen.

3. Das Verfahren nach Anspruch 2, **wobei** die Iterationen des Verfahrens als Iterationen eines evolutionären Optimierungsalgorithmus realisiert werden.

4. Das Verfahren nach einem der vorhergehenden Ansprüche, **wobei** das Verfahren ferner einen Schritt des Empfangens einer Beschränkung für mindestens einen Sprühprofilparameter umfasst, wobei bei dem Anpassen des Iterationssprühprofils ein neuer Wert des mindestens einen Sprühprofilparameters der Beschränkung entspricht.

5. Das Verfahren nach einem der vorhergehenden Ansprüche, **wobei** im Schritt des Auswählens, N Sprühprofile ausgewählt werden, die dem Iterationssprühprofil auf der Grundlage einer vorgegebenen Metrik am nächsten kommen.

6. Das Verfahren nach einem der vorhergehenden Ansprüche, **wobei** im Schritt des Auswertens mindestens ein Sprühbeschichtungsmusterparameter, ausgewählt aus Übertragungseffizienz, Homogenität der Sprühbeschichtung, Sprühbeschichtungsdicke und Sprühbeschichtungsbreite, aus dem Iterationsausgabe-Sprühmuster bestimmt wird und der bestimmte Wert mit mindestens einem Sprühbeschichtungsmusterparameterzielwert verglichen wird.

7. Das Verfahren nach einem der vorhergehenden Ansprüche, wobei in jeder Iteration, das Kombinieren als gewichteter Durchschnitt realisiert wird, wobei das jedem Algorithmusausgabe entsprechende Gewicht proportional zum Abstand des entsprechenden ausgewählten Sprühprofils, von dem die Algorithmusausgabe erzeugt wird, vom Iterationssprühprofil gemäß einer vorgegebenen Metrik ist.

8. Das Verfahren nach einem der vorhergehenden Ansprüche, **wobei** das Anpassen des Iterationssprühprofils das Erhalten einer Zufallszahl und das Anpassen oder Ersetzen eines Wertes eines Parameters aus dem Iterationssprühprofil durch die erhaltene Zufallszahl umfasst.

9. Das Verfahren nach einem der vorhergehenden Ansprüche, **wobei** der mehrdimensionale Parameterunterraum, der einen erwarteten Bereich von Sprühbeschichtungsanwendungen definiert, im Wesentlichen gleichmäßig durch die Probesprühprofile in der Sammlung abgedeckt wird, so dass in den meisten Dimensionen des Parameterunterraums mehrere verschiedene Werte des Profilparameters, der dieser Dimension entspricht, in verschiedenen Probesprühprofilen dargestellt werden.

10. Das Verfahren nach einem der vorangehenden Ansprüche, **wobei** es ferner eine Sammlung-Vorbereitungsphase umfasst, die die folgenden Schritte umfasst:

• Vorbereiten einer Reihe von Probesprühprofilen;
• für jedes der vorbereiteten Profile, Erhalten von einem entsprechenden Probesprühmuster, indem eine Probenoberfläche abgebildet wird, die mit einer Sprühbeschichtungsanlage sprühbeschichtet wurde, das mit den Parametern des gegebenen Probesprühprofils eingestellt wurde, und die Pixel des Bildes mit einer Kalibrierungsfunktion kalibriert werden,

wobei die Kalibrierungsfunktion durch eine Kalibrierungsphase erhalten wird, die die folgenden Schritte umfasst:

• Erhalten von mindestens einer mit einer Sprühbeschichtungsanlage sprühbeschichteten Probenoberfläche;
• Abbilden der Probenoberfläche;
• Messen der Dicke der Farbe auf der Probenoberfläche an mehreren Punkten der Probenoberfläche;
• Erhalten von Pixelwerten aus dem Bild der Probenoberfläche in Punkten, die jedem Messpunkt entsprechen;
• Anpassen einer Funktion an die erhaltenen Paare aus gemessener Dicke und entsprechendem Pixelwert.

11. Das Verfahren nach einem der vorhergehenden Ansprüche, wobei in jeder Iteration vor dem Kombinieren jede Algorithmusausgabe durch die folgenden Schritte verarbeitet wird:

• Kalibrieren der Pixel zumindest eines Teils der Algorithmusausgabe mit einer Kalibrierungsfunktion;

• Mittelwertbilden über jede Zeile oder Spalte, um einen Vektor der durchschnittlichen kalibrierten Werte zu erhalten;

wobei die Kalibrierungsfunktion durch eine Kalibrierungsphase erhalten wird, die die folgenden Schritte umfasst:

• Erhalten von mindestens einer mit einer Sprühbeschichtungsanlage sprühbeschichteten Probenoberfläche;
• Abbilden der Probenoberfläche;
• Messen der Dicke der Farbe auf der Probenoberfläche an mehreren Punkten der Probenoberfläche;
• Erhalten von Pixelwerten aus dem Bild der Probenoberfläche in Punkten, die jedem Messpunkt entsprechen;
• Anpassen einer Funktion an die erhaltenen Paare aus gemessener Dicke und entsprechendem Pixelwert.

**12.** Das Verfahren nach Anspruch 11, **wobei** es ferner einen Schritt des Anzeigens des aus den verarbeiteten Algorithmusausgaben in mindestens einer Iteration kombinierten Iterationsausgabe-Sprühmusters auf einer Anzeigevorrichtung umfasst, wobei das angezeigte Bild mehrere identische Zeilen oder Spalten umfasst, die jeweils die Werte enthalten, die den einzelnen Werten der verarbeiteten Algorithmusausgabe entsprechen.

**13.** Das Verfahren nach einem der vorhergehenden Ansprüche, **wobei** in mindestens einer Iteration das Iterationsausgabe-Sprühmuster auf ein 3D-Modell eines zur Sprühbeschichtung vorgesehenen Teils projiziert wird, wobei das Teil mit dem projizierten Muster auf einer Anzeigevorrichtung angezeigt wird.

**14.** Ein Computerprogramm, das Anweisungen umfasst, die, wenn das Programm von einem Computer ausgeführt wird, den Computer veranlassen, das Verfahren nach einem der Ansprüche 1 bis 9 auszuführen.

**15.** Ein computerlesbares Speichermedium, das Anweisungen umfasst, die, wenn sie von einem Computer ausgeführt werden, den Computer veranlassen, das Verfahren nach einem der Ansprüche 1 bis 9 auszuführen.

## Revendications

**1.** Un procédé pour fournir des paramètres de réglage d'un appareil de revêtement par pulvérisation, où le procédé utilise une unité de commande et un algorithme d'apprentissage automatique mis en œuvre par l'unité de commande, **caractérisé en ce qu'**il utilise en outre une collection de modèles de pulvérisation d'échantillons et de profils de pulvérisation d'échantillons correspondants, où

l'algorithme est entraîné sur un ensemble de données d'entraînement, où chaque point de données contient au moins un profil de pulvérisation d'échantillon, un modèle de pulvérisation d'échantillon correspondant, un profil de pulvérisation opérationnel et un modèle de pulvérisation opérationnel correspondant, où le modèle de pulvérisation opérationnel correspond à une étiquette pour l'entraînement,
où chaque profil de pulvérisation contient des valeurs de plusieurs paramètres de profil,
chaque modèle de pulvérisation d'échantillon représente une distribution de l'épaisseur de peinture fournie par un appareil de revêtement par pulvérisation sur une surface d'échantillon pour un profil de pulvérisation d'échantillon spécifique, et
chaque modèle de pulvérisation opérationnelle représente une distribution de l'épaisseur de peinture fournie par un appareil de revêtement par pulvérisation sur une surface d'échantillon pour un profil de pulvérisation opérationnelle spécifique,

où les profils de pulvérisation d'échantillon de la collection appartiennent à un sous-espace multidimensionnel des paramètres définissant une gamme attendue d'applications de revêtement par pulvérisation, les profils de pulvérisation d'échantillon de l'ensemble de données d'entraînement appartiennent à un sous-espace multidimensionnel des paramètres définissant une gamme d'entraînement d'applications de revêtement par pulvérisation , où le sous-espace de la gamme d'entraînement est, dans au moins certaines dimensions, plus finement couvert par les profils de pulvérisation d'échantillon et/ou plus large que le sous-espace de la gamme attendue, et où les modèles de pulvérisation opérationnels sont fournis par plusieurs appareils de revêtement par pulvérisation différents provenant d'installations de revêtement par pulvérisation différentes, où le procédé comprend au moins une itération, où chaque itération comprend les étapes suivantes :

• recevoir un profil de pulvérisation par itération ;
• sélectionner des N profils de pulvérisation d'échantillons avec N modèles de pulvérisation d'échantillons correspondants dans la collection, où N est un nombre entier positif prédéfini ;
• introduire dans l'algorithme le profil de pulvérisation par itération et l'un des profils de pulvérisation d'échantillon avec le modèle de pulvérisation d'échantillon correspondant et recevoir une sortie d'algorithme définissant un modèle de pulvérisation attendu pour chacun des N profils de pulvérisation d'échantillon sélectionnés ;
• combiner des N sorties d'algorithme en un modèle de pulvérisation de sortie par itération ;
• évaluer le modèle de pulvérisation de sortie par itération en fonction d'un critère prédéterminé ;
• ajuster le profil de pulvérisation par itération et fournir celui-ci comme profil de pulvérisation par itération pour l'itération suivante si le modèle de pulvérisation de sortie par itération n'est pas conforme au critère, ou utiliser les paramètres de profil du profil de pulvérisation par itération comme paramètres de réglage de l'appareil de revêtement par pulvérisation si le modèle de pulvérisation de sortie par itération est conforme au critère.

2. Le procédé selon la revendication 1, **où,** avant la première itération, le procédé comprend une étape de recevoir au moins une valeur cible pour au moins un paramètre du modèle de pulvérisation, où, à chaque itération, l'étape de combiner comprend la détermination des paramètres du modèle de revêtement par pulvérisation par itération à partir du modèle de pulvérisation de sortie par itération, et le procédé comprend en outre une étape de détermination d'un score basé sur une distance entre les valeurs cibles des paramètres du modèle de revêtement par pulvérisation et les valeurs ou les paramètres du modèle de revêtement par pulvérisation par itération selon une métrique prédéfinie, où, en fonction du score, le profil de pulvérisation par itération est soit ajusté de manière aléatoire et fourni comme profil de pulvérisation par itération pour l'itération suivante, soit ses paramètres sont utilisés pour régler l'appareil de revêtement par pulvérisation.

3. Le procédé selon la revendication 2, **où** les itérations du procédé sont réalisées comme des itérations d'un algorithme d'optimisation évolutionnaire.

4. Le procédé selon l'une quelconque des revendications précédentes, **où** le procédé comprend en outre une étape de recevoir une contrainte pour au moins un paramètre du profil de pulvérisation, où, lorsque le profil de pulvérisation par itération est ajusté, une nouvelle valeur de l'au moins un paramètre du profil de pulvérisation est conforme à la contrainte.

5. Le procédé selon l'une quelconque des revendications précédentes, **où,** lors de l'étape de sélectionner, les N profils de pulvérisation les plus proches du profil de pulvérisation par itération sont sélectionnés sur la base d'une métrique prédéterminée.

6. Le procédé selon l'une quelconque des revendications précédentes, **où,** lors de l'étape d'évaluer, au moins un paramètre du modèle de revêtement par pulvérisation sélectionné parmi l'efficacité de transfert, l'homogénéité du revêtement par pulvérisation, l'épaisseur du revêtement par pulvérisation et la largeur du revêtement par pulvérisation est déterminé à partir du modèle de pulvérisation de sortie par itération et la valeur déterminée est comparée à au moins une valeur cible du paramètre du modèle de revêtement par pulvérisation.

7. Le procédé selon l'une quelconque des revendications précédentes, où, à chaque itération, la combinaison est réalisée sous la forme d'une moyenne pondérée, où le poids correspondant à chaque sortie d'algorithme est proportionnel à la distance entre le profil de pulvérisation sélectionné correspondant, à partir duquel la sortie d'algorithme est produite, et à partir du profil de pulvérisation par itération selon une métrique prédéterminée.

8. Le procédé selon l'une quelconque des revendications précédentes, **où** l'ajustement du profil de pulvérisation par itération comprend l'obtention d'un nombre aléatoire et l'ajustement ou le remplacement d'une valeur d'un paramètre du profil de pulvérisation par itération par le nombre aléatoire obtenu.

9. Le procédé selon l'une quelconque des revendications précédentes, **où** le sous-espace multidimensionnel des paramètres définissant une gamme attendue d'applications de revêtement par pulvérisation est couvert de manière substantiellement uniforme par les profils de pulvérisation d'échantillon de la collection de sorte que dans la plupart des dimensions du sous-espace des paramètres, plusieurs valeurs différentes du paramètre de profil correspondant à cette dimension sont représentées dans différents profils de pulvérisation d'échantillon.

10. Le procédé selon l'une quelconque des revendications précédentes, où il comprend en outre une phase de préparation de la collection comprenant les étapes suivantes :

• préparer un ensemble de profils de pulvérisation d'échantillon ;

• pour chacun des profils préparés, obtenir un modèle de pulvérisation d'échantillon correspondant en prenant une image d'une surface d'échantillon revêtue par pulvérisation par un appareil de revêtement par pulvérisation réglé avec les paramètres d'un profil de pulvérisation d'échantillon donné et en étalonnant les pixels de l'image à l'aide d'une fonction d'étalonnage,

où la fonction d'étalonnage est obtenue par une phase d'étalonnage comprenant les étapes suivantes :

• obtenir au moins une surface d'échantillon revêtue par pulvérisation à l'aide d'un appareil de revêtement par pulvérisation ;
• prendre une image de la surface d'échantillon ;
• mesurer l'épaisseur de la peinture sur la surface d'échantillon en plusieurs points de la surface d'échantillon ;
• obtenir des valeurs de pixels de l'image de la surface d'échantillon en des points correspondant à chaque point de mesure ;
• ajuster une fonction aux paires obtenues d'épaisseur mesurée et de valeur de pixel correspondante.

11. Le procédé selon l'une quelconque des revendications précédentes, où, dans chaque itération avant la combinaison, chaque sortie d'algorithme est traitée par les étapes suivantes :

• étalonner les pixels d'au moins une partie de la sortie d'algorithme à l'aide d'une fonction d'étalonnage ;
• calculer la moyenne sur chaque ligne ou colonne pour obtenir un vecteur de valeurs étalonnées moyennes ;

où la fonction d'étalonnage est obtenue par une phase d'étalonnage comprenant les étapes suivantes :

• obtenir au moins une surface d'échantillon revêtue par pulvérisation à l'aide d'un appareil de revêtement par pulvérisation ;
• prendre une image de la surface d'échantillon ;
• mesurer l'épaisseur de la peinture sur la surface d'échantillon en plusieurs points de la surface d'échantillon ;
• obtenir des valeurs de pixels de l'image de la surface d'échantillon en des points correspondant à chaque point de mesure ;
• ajuster une fonction aux paires obtenues d'épaisseur mesurée et de valeur de pixel correspondante.

12. Le procédé selon la revendication 11, **où** il comprend en outre une étape d'afficher le modèle de pulvérisation de sortie par itération combiné à partir des sorties d'algorithme traitées dans au moins une itération sur un dispositif d'affichage, où l'image affichée comprend plusieurs lignes ou colonnes identiques, où chacune contient les valeurs correspondant aux valeurs individuelles de la sortie d'algorithme traitée.

13. Le procédé selon l'une quelconque des revendications précédentes, **où,** dans au moins une itération, le modèle de pulvérisation de sortie par itération est projeté sur un modèle 3D d'une partie destinée à être revêtue par pulvérisation, où la partie avec le modèle projeté est affichée sur un dispositif d'affichage.

14. Un logiciel comprenant des instructions qui, lorsque le logiciel est exécuté par un ordinateur, amènent l'ordinateur à mettre en œuvre le procédé selon l'une quelconque des revendications 1 à 9.

15. Un support de stockage lisible par ordinateur comprenant des instructions qui, lorsqu'elles sont exécutées par un ordinateur, amènent l'ordinateur à mettre en œuvre le procédé selon l'une des revendications 1 à 9.

Training phase

Provider collection   Operational dataset

User method input

User collection   Input spraying profile data

Training of CNN

Method iterations

Processing by CNN ← Selection of N collection individuals ← Iteration input

CNN output simplification and combining

Adjusting the iteration spraying profile and starting next iteration

No

Evaluation criteria fulfilled?

No

Max iteration number reached?

Yes

Yes

Setting spray-coating apparatus with the iteration spraying profile parameters

Setting spray-coating apparatus with spraying profile parameters from an iteration evaluated as best

Fig. 1

For n = 1..N

Iteration
input

Processing by
CNN

Collection
individual

Selection of
N collection
individuals

Calibration and
simplification
of CNN output

Iteration spraying
profile

Weighted average
of the N simplified
outputs = stripes

Adjusting the iteration
spraying profile by changing
the value of at least one
parameter from the profile
and starting next iteration

Determine spraying
pattern parameters
for which criteria are
given

No

Evaluation
criteria fulfilled?

No

Max
iteration number
reached?

Yes

Yes

Display the best
result. Provide parameters
for apparatus setting

Fig. 2

Spray-coated sample
surface segmented into
a grid

↓

Imaging the sample
surface

↓

Selecting multiple grid cells
with substantially uniform
pixel values

↓

Measuring thickness of paint
on the sample surface in places
corresponding to the selected cells

↓

Pairing the masured thickness
with corresponding pixel values

↓

Fiting a polynomial to the paired values
to obtain a calibration function

Fig. 3

Establishing a relevant
spraying profile parameter
subspace

Creating sample spraying profiles
covering the subspace
accross all relevant dimensions

Using a spray-coating apparatus
to obtain a spray-coated sample
surface for each sample profile

Obtaining an image of each
spray-coated surface

Calibrating each image to convert
each pixel into a thickness-representing
value to obtain a sample spraying pattern

Creating a dataset of pairs
sample spraying profile +
+ corresponding sample spraying pattern

Fig. 4

Fig. 5

Fig. 6

Spraying pattern
(calibrated)

Stripe
(Avg row thickness
[μm])

[
$x_1$;
$x_2$;
$x_3$;
.
.
.
$x_{1024}$
]

Stretched stripe visualisation

Fig. 7

Fig. 8

Fig. 9

**EP 4 486 514 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019201360 A1

- EP 1074306 A2

**Non-patent literature cited in the description**

- **LECUN, Y.** ; **BENGIO, Y.** ; **HINTON, G.** Deep learning. *Nature*, 2015, vol. 521 (7553), 436-444
- **LONG, J.** ; **SHELHAMER, E.** ; **DARRELL, T.** Fully convolutional networks for semantic segmentation. *Proceedings of the IEEE conference on computer vision and pattern recognition*, 2015, 3431-3440
- Visualizing and understanding convolutional networks. **ZEILER, M. D.** ; **FERGUS, R.** European conference on computer vision. Springer, 2014, 818-833

- **DUMOULIN, V.** ; **VISIN, F.** A guide to convolution arithmetic for deep learning. *arXiv:1603.07285*, 2016
- **PAL, N. R.** ; **PAL, S. K.** A review on image segmentation techniques. *Pattern recognition*, 1993, vol. 26 (9), 1277-1294
- **LOFFE, S.** ; **SZEGEDY, C.** Batch normalization: Accelerating deep network training by reducing internal covariate shift. *Proceedings of the 32nd international conference on machine learning (ICML-15)*, 2015, 448-456